(19) **Europäisches Patentamt / European Patent Office / Office européen des brevets**

(11) **EP 4 644 443 A2**

(12) **EUROPÄISCHE PATENTANMELDUNG**

(43) Veröffentlichungstag:
**05.11.2025   Patentblatt 2025/45**

(21) Anmeldenummer: **25202428.6**

(22) Anmeldetag: **27.09.2022**

(51) Internationale Patentklassifikation (IPC):
**C08F 236/08** (2006.01)

(52) Gemeinsame Patentklassifikation (CPC):
(C-Sets verfügbar)
**C08L 21/00; B60C 1/00; C08F 236/08; C08L 7/00; C08L 9/00; C08L 9/06; B60C 2001/005; B60C 2001/0066; B60C 2001/0075**   (Forts.)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Validierungsstaaten:
**MA**

(30) Priorität: **28.09.2021   EP 21199587**

(62) Dokumentnummer(n) der früheren Anmeldung(en) nach Art. 76 EPÜ:
**22797332.8 / 4 408 919**

(71) Anmelder: **SunCoal Industries GmbH**
**14974 Ludwigsfelde (DE)**

(72) Erfinder:
• **STÜCKER, Alexander**
**14974 Ludwigsfelde (DE)**

• **WITTMANN, Tobias**
**14974 Ludwigsfelde (DE)**
• **SCHMAUCKS, Gerd**
**14974 Ludwigsfelde (DE)**
• **PODSCHUN, Jacob**
**14974 Ludwigsfelde (DE)**
• **SCHWAIGER, Bernhard**
**50374 Erftstadt (DE)**

(74) Vertreter: **Steffan & Kiehne Patentanwälte PartG mbB**
**Burgplatz 21-22**
**40213 Düsseldorf (DE)**

Bemerkungen:
Diese Anmeldung ist am 16-09-2025 als Teilanmeldung zu der unter INID-Code 62 erwähnten Anmeldung eingereicht worden.

(54) **SCHWEFEL-VERNETZBARE KAUTSCHUKZUSAMMENSETZUNG ENTHALTEND ORGANISCHE FÜLLSTOFFE UND ORGANOSILAN**

(57)    Die vorliegende Erfindung betrifft eine vulkanisierbare Kautschukzusammensetzung, umfassend ein Vulkanisations-System VS, welches wenigstens Schwefel und/oder wenigstens einen Schwefelspender umfasst, eine Kautschukkomponente K enthaltend wenigstens einen Kautschuk, welcher mittels Schwefel vernetzbar ist, eine Füllstoffkomponente F, die wenigstens einen organischen Füllstoff enthält, welcher einen $^{14}$C-Gehalt in einem Bereich von 0,20 bis 0,45 Bq/g Kohlenstoff und eine BET-Oberfläche in einem Bereich von 20 bis 150 $m^2$/g aufweist und wenigstens ein Organosilan, welches wenigstens eine hydrolysierbare Gruppe und wenigstens ein Schwefel-Atom aufweist, ein Kit-of-parts umfassend als Teil (A) eine Kautschukzusammensetzung enthaltend vorgenannte Komponenten F und K und als Teil (B) das Vulkanisations-System VS umfassend wenigstens Schwefel und/oder wenigstens einen Schwefelspender, wobei das vorgenannte Organosilan in Teil (A) enthalten ist, jeweils daraus erhältliche vulkanisierte Kautschukzusammensetzungen, eine Verwendung eines der vorgenannten Produkte zum Einsatz bei der Herstellung von Reifen, Reifenkomponenten und Gummiartikeln, und entsprechende Reifen, Reifenkomponenten und Gummiartikel als solche.

Fig. 1

EP 4 644 443 A2

(52) Gemeinsame Patentklassifikation (CPC): (Forts.)

C-Sets
**C08F 236/08, C08F 220/44, C08F 236/06,
C08F 220/06;
C08L 7/00, C08L 97/005, C08L 91/00, C08K 3/04,
C08K 3/22, C08K 5/548, C08K 5/09, C08K 5/18,
C08K 5/005;
C08L 9/06, C08L 97/005, C08L 91/00, C08K 3/22,
C08K 5/548, C08K 5/09, C08K 5/18, C08K 5/005;**
C08L 7/00, C08L 97/005, C08K 3/06, C08K 3/04,
C08K 5/18

**Beschreibung**

Die vorliegende Erfindung betrifft eine vulkanisierbare Kautschukzusammensetzung, umfassend ein Vulkanisations-System VS, welches wenigstens Schwefel und/oder wenigstens einen Schwefelspender, der unter Vulkanisationsbedingungen Schwefel freisetzt, umfasst, eine Kautschukkomponente K enthaltend wenigstens einen Kautschuk, welcher mittels Schwefel vernetzbar ist, eine Füllstoffkomponente F, die wenigstens einen organischen Füllstoff enthält, welcher einen $^{14}C$-Gehalt in einem Bereich von 0,20 bis 0,45 Bq/g Kohlenstoff und eine BET-Oberfläche in einem Bereich von 20 bis 150 $m^2$/g aufweist und wenigstens ein Organosilan, welches wenigstens eine hydrolysierbare Gruppe und wenigstens ein Schwefel-Atom aufweist, ein Kit-of-parts umfassend als Teil (A) eine Kautschukzusammensetzung enthaltend vorgenannte Komponenten F und K und als Teil (B) das Vulkanisations-System VS umfassend wenigstens Schwefel, wobei das vorgenannte Organosilan in Teil (A) enthalten ist, jeweils daraus erhältliche vulkanisierte Kautschukzusammensetzungen, eine Verwendung eines der vorgenannten Produkte zum Einsatz bei der Herstellung von Reifen, Reifenkomponenten und Gummiartikeln und entsprechende Reifen, Reifenkomponenten und Gummiartikel als solche.

**Stand der Technik / Hintergrund der Erfindung**

Der Einsatz von Verstärkerfüllstoffen in Kautschukzusammensetzungen ist im Stand der Technik bekannt. Durch den Einsatz von Verstärkerfüllstoffen werden die Gebrauchseigenschaften daraus hergestellter vulkanisierter Gummiartikel gewährleistet. So wird durch die Verwendung von Verstärkerfüllstoffen beispielsweise die Viskosität der Kautschuke erhöht und das Bruchverhalten der Vulkanisate verbessert. Industrieruße stellen dabei die größte Menge an Verstärkerfüllstoffen dar. Industrieruße werden durch unvollständige Verbrennung organischer Verbindungen oder durch thermische Zersetzung von Kohlenwasserstoffen hergestellt. Die meisten Industrieruße werden durch das Furnace-Verfahren erzeugt. Auf Grund der hohen $CO_2$-Menge während des Produktionsprozesses, ist es wünschenswert, die Verwendung fossiler Energieträger zur Herstellung von Füllstoffen zu vermeiden, beziehungsweise auf ein Minimum zu reduzieren. Zudem können Industrieruße oftmals für bestimmte Anwendungen auch aus Gründen der Farbgebung nicht eingesetzt werden. Eine bekannte Alternative zum Einsatz von Industrierußen als Verstärkerfüllstoffe sind Fällungskieselsäure zusammen mit bifunktionellen Silanen.

Zur Herstellung von Laufflächen von Pkw-Reifen ist der Einsatz von Kieselsäure mit BET-Oberflächen von 120-200 $m^2$/g zusammen mit bi-funktionalen Kopplungsagenzien wie Schwefel-funktionellen Silanen bekannt, weil damit das "magische Dreieck" der Reifenperformance mit den Eigenschaften Abrieb, Rollwiderstand und Nasshaftung gegenüber dem Einsatz von Industrieruß erweitert werden konnte.

Bei dynamischen Bauteilen (Reifenunterbau, Riemen, Lager, Bänder) spielt im Gegensatz zur Lauffläche der Verschleiß durch Reibung oder die Nass- bzw. Trockenhaftung keine so relevante Rolle wie im Fall von Reifenlaufflächen. Das primäre Ziel bei dynamischen Bauteilen ist es, die Umwandlung von mechanischer Energie in Wärme zu reduzieren. Die Wärmebildung wird durch den Verlustfaktor tan delta (tan $\delta$) beschrieben. Der Verlustfaktor tan delta charakterisiert das viskoelastische Verhalten und ergibt sich aus dem Quotienten von viskosem und elastischem Anteil (Verlustmodul zu Speichermodul). Der Speichermodul steht für den Teil der mechanischen Energie, die vom System gespeichert wird, während der Verlustmodul die von mechanischer in Wärmeenergie umgewandelte Energie darstellt. Ein niedriger Verlustfaktor als Kennzahl für die Wärmebildung ist somit insbesondere im Fall der vorgenannten dynamischen Bauteile bevorzugt.

Bei der Wärmebildung ist auch das eingesetzte Polymer zu berücksichtigen, da es aufgrund seiner dynamischen Eigenschaften bereits einen Beitrag zur Wärmebildung leistet. So führt eine niedrige Glasübergangstemperatur $T_g$ zu einem niedrigeren Verlustfaktor.

Um die Wärmebildung zu minimieren, werden in Kautschukmischungen für dynamische Bauteile vorwiegend Industrieruße mit niedriger spezifischer Oberfläche eingesetzt. Die Wärmebildung bzw. der Verlustfaktor kann durch einen niedrigen Füllgrad des Verstärkerfüllstoffs, größere Partikel des Verstärkerfüllstoffs in der betrachteten Volumeneinheit und/oder einen großen Abstand der Verstärkerpartikel in der Volumeneinheit verringert werden. Der Volumenfüllgrad kann bei einer hohen Struktur des Industrierußes (ausgedrückt durch die sogenannte *compressed oil absorption number* (COAN)) reduziert werden, ohne dass dabei die Härte des Bauteils beeinflusst wird.

Diese Unabhängigkeit gilt jedoch nicht für alle Parameter. Stattdessen beeinflusst die Reduzierung des Verlustfaktors - um eine möglichst niedrige Wärmebildung zu erreichen - üblicherweise andere Eigenschaften der vulkanisierten Kautschukzusammensetzung. Die Anhebung der Vernetzungsdichte führt unabhängig vom Verstärkerfüllstoff zu einem niedrigeren Verlustfaktor. Allerdings hat eine höhere Vernetzungsdichte negative Auswirkungen auf die vulkanisierte Kautschukzusammensetzung beispielsweise bezüglich ihrer Risseigenschaften (niedrigere Bruchdehnung) und Alterungseigenschaften.

Eine wesentliche Problematik des Verstärkerfüllstoffs liegt darin, dass eine Reduzierung des Verlustfaktors zu Lasten der dynamischen Steifigkeit erfolgt: bei einem geringen Wert für den Verlustfaktor tan delta ist üblicherweise eine nur geringe dynamische Steifigkeit zu beobachten. Eine solche geringe dynamische Steifigkeit führt jedoch bei einer gleichen Belastung zu einer größeren Deformation der Kautschukzusammensetzung und ist somit nachteilig insbesondere für den Einsatz von Kautschukzusammensetzungen zur Herstellung von Reifen und deren dynamischer Bauteile.

Es besteht daher ein Bedarf, eine Kautschukzusammensetzung bereitzustellen, die nach ihrer Vulkanisation sowohl einen möglichst niedrigen Verlustfaktor als auch eine möglichst hohe dynamische Steifigkeit aufweist, so dass die Umwandlung von mechanischer Energie in Wärme minimiert wird und die vulkanisierte Kautschukzusammensetzung bei Belastung nur möglichst geringe Deformationen aufweist.

**Aufgabe**

Eine Aufgabe der vorliegenden Erfindung ist es daher, eine vulkanisierbare Kautschukzusammensetzung bereitzustellen, die nach ihrer Vulkanisation eine möglichst hohe dynamische Steifigkeit und gleichzeitig eine möglichst geringe Wärmebildung aufweist und die insbesondere eine Entkopplung dieser beiden Parameter ermöglicht, so dass die Kautschukzusammensetzung hinsichtlich ihrer zu erzielenden Performance flexibler und besser eingestellt werden kann.

**Lösung**

Diese Aufgabe wird gelöst durch die in den Patentansprüchen beanspruchten Gegenstände sowie die in der nachfolgenden Beschreibung beschriebenen bevorzugten Ausführungsformen dieser Gegenstände.

Ein erster Gegenstand der vorliegenden Erfindung ist eine vulkanisierbare Kautschukzusammensetzung umfassend eine Kautschukkomponente K, eine Füllstoffkomponente F und ein Vulkanisations-System VS, wobei

das Vulkanisations-System VS wenigstens Schwefel und/oder wenigstens einen Schwefelspender umfasst,

die Kautschukkomponente K wenigstens einen Kautschuk enthält, welcher mittels Schwefel vernetzbar ist,

die Füllstoffkomponente F wenigstens einen organischen Füllstoff enthält, welcher einen $^{14}$C-Gehalt in einem Bereich von 0,20 bis 0,45 Bq/g Kohlenstoff und eine BET-Oberfläche in einem Bereich von 20 bis 150 m$^2$/g, vorzugsweise von >20 bis 150 m$^2$/g, aufweist und

die vulkanisierbare Kautschukzusammensetzung zudem wenigstens ein Organosilan als Teil der Füllstoffkomponente F umfasst, wobei das wenigstens eine Organosilan wenigstens eine hydrolysierbare Gruppe und wenigstens ein Schwefel-Atom aufweist und vorzugsweise in einer Menge enthalten ist, die in einem Bereich von 0,25 bis 5 phr liegt.

Ein weiterer Gegenstand der vorliegenden Erfindung ist ein Kit-of-parts umfassend in räumlich getrennter Form

als Teil (A) eine Kautschukzusammensetzung, die wenigstens die erfindungsgemäß eingesetzte Kautschukkomponente K und wenigstens die erfindungsgemäß eingesetzte Füllstoffkomponente F umfasst, wobei Teil (A) des Kit-of-parts jedoch nicht Schwefel und/oder wenigstens einen Schwefelspender des erfindungsgemäß eingesetzten Vulkanisations-Systems VS umfasst, und

als Teil (B) ein erfindungsgemäß eingesetztes Vulkanisations-System VS umfassend wenigstens Schwefel und/oder wenigstens einen Schwefelspender,

wobei das erfindungsgemäß eingesetzte Organosilan in der Füllstoffkomponente F in Teil (A) vorzugsweise in einer Menge enthalten ist, die in einem Bereich von 0,25 bis 5 phr liegt.

Ein weiterer Gegenstand der vorliegenden Erfindung ist eine vulkanisierte Kautschukzusammensetzung, welche erhältlich ist durch Vulkanisation der erfindungsgemäßen vulkanisierbaren Kautschukzusammensetzung oder durch Vulkanisation einer durch Zusammengeben und Vermischen der beiden Teile (A) und (B) des erfindungsgemäßen Kit-of-parts erhältlichen vulkanisierbaren Kautschukzusammensetzung.

Ein weiterer Gegenstand der vorliegenden Erfindung ist eine Verwendung der erfindungsgemäßen vulkanisierbaren Kautschukzusammensetzung, des erfindungsgemäßen Kit-of-parts oder der erfindungsgemäßen vulkanisierten Kautschukzusammensetzung zum Einsatz bei der Herstellung von Reifen, vorzugsweise bei der Herstellung von Luftreifen und Vollgummireifen, und Reifenkomponenten, vorzugsweise bei der Herstellung von solchen Reifenkomponenten, für die ein möglichst geringer tan delta Wert der zu ihrer Herstellung eingesetzten vulkanisierten Kautschukzusammensetzungen anvisiert ist wie beispielsweise Kautschukzusammensetzungen umfassend Naturkautschuk(e) und/oder Kautschuke mit einer niedrigen Glasübergangstemperatur $T_g$, insbesondere bei der Herstellung von Reifenkomponenten ausgewählt aus der Gruppe aus Basis-Komponenten (base), d.h. Komponenten unterhalb der Lauffläche, Schulterstreifen (wing), Gürtelabdeckbändern (cap-ply), Gürteln (belt), Wulstkernen (bead) und/oder Wulstverstärkungen, oder zum Einsatz bei der Herstellung von Gummiartikeln wie technischen Gummiartikeln, vorzugsweise von Antriebsriemen, Gurten, Formteilen wie Puffern, Lagern, insbesondere Hydrolagern, Transportbändern, Profilen, Dichtungen, Ringen und/oder Schläuchen.

Ein weiterer Gegenstand der vorliegenden Erfindung ist ein Reifen, vorzugsweise ein Luftreifen oder Vollgummireifen, oder eine Reifenkomponente oder ein Gummiartikel wie ein technischer Gummiartikel, hergestellt jeweils unter Einsatz der erfindungsgemäßen vulkanisierbaren Kautschukzusammensetzung, des erfindungsgemäßen Kit-of-parts' oder der erfindungsgemäßen vulkanisierten Kautschukzusammensetzung, wobei vorzugsweise im Fall von Reifenkomponenten diese ausgewählt sind aus Basis-Komponenten (base), d.h. Komponenten unterhalb der Lauffläche, Schulterstreifen (wing), Gürtelabdeckbändern (cap-ply), Gürteln (belt), Wulstkernen (bead) und/oder Wulstverstärkungen und wobei vorzugsweise im Fall von Gummiartikeln wie technischen Gummiartikeln diese ausgewählt sind aus Antriebsriemen, Gurten, Formteilen wie Puffern, Lagern, insbesondere Hydrolagern, Transportbändern, Profilen, Dichtungen, Ringen und/oder Schläuchen.

Es wurde überraschend gefunden, dass die erfindungsgemäße Kautschukzusammensetzung eine hohe dynamische Steifigkeit und gleichzeitig einen geringen tan delta Wert aufweist. Mit der insbesondere gegenüber Industrierußhaltigen Kautschukzusammensetzungen besseren Entkopplung dieser beiden Eigenschaften kann eine flexiblere und bessere Einstellung der zu erzielenden Performance der Kautschukzusammensetzung erreicht werden.

Insbesondere die Kombination des erfindungsgemäß eingesetzten Füllstoffs und des erfindungsgemäß eingesetzten Organosilans führt zu einer Verbesserung der Perfomance der Kautschukzusammensetzung. Durch den (Teil-) Ersatz von Industrieruß durch den erfindungsgemäß eingesetzten Füllstoff kann der tan delta Wert reduziert werden, während die dynamische Steifigkeit wenigstens unverändert bleibt. Überraschenderweise kann durch den zusätzlichen Einsatz des erfindungsgemäß eingesetzten Organosilans neben einer weiteren Reduzierung des tan delta Werts zudem überraschenderweise eine höhere dynamische Steifigkeit erreicht werden. Es wurde zudem überraschend gefunden, dass durch die Kombination des erfindungsgemäß eingesetzten Füllstoffs und des erfindungsgemäß eingesetzten Organosilans oftmals eine gleiche bis höhere Bruchdehnung erreicht wird (im Vergleich zu vulkanisierten Kautschukzusammensetzungen, die Ruß als Füllstoff enthalten). Des Weiteren wurde die Härte der Kautschukzusammensetzung nicht negativ beeinflusst. Die Kombination des erfindungsgemäß eingesetzten Füllstoffs und des erfindungsgemäß eingesetzten Organosilans ist insbesondere für Schwefelvernetzte Kautschukzusammensetzungen vorteilhaft.

Die Verwendung des erfindungsgemäßen Füllstoffs ist ebenfalls unter Umweltgesichtspunkten von großem Vorteil. Bei der Herstellung von Industrieruß werden im Produktionsprozess große Mengen $CO_2$ freigesetzt. Der erfindungsgemäße Füllstoff stellt somit eine umweltfreundliche Füllstoff-Alternative dar und beeinflusst darüber hinaus - im Gegensatz zu Industrieruß - nicht die Farbe der Kautschukzusammensetzungen.

## Ausführliche Beschreibung

Der Begriff "umfassend" im Sinne der vorliegenden Erfindung im Zusammenhang, z.B. mit den erfindungsgemäßen vulkanisierbaren Kautschukzusammensetzungen und den Verfahrensschritten oder Stufen von hierin beschriebenen Verfahren hat vorzugsweise die Bedeutung "bestehend aus". Dabei können beispielsweise hinsichtlich der erfindungsgemäßen vulkanisierbaren Kautschukzusammensetzung - neben den darin zwingend vorhandenen Bestandteilen - zudem eine oder mehrere der weiteren nachstehend genannten optional enthaltenen Bestandteile in diesen enthalten sein. Alle Bestandteile können dabei jeweils in ihren nachstehend genannten bevorzugten Ausführungsformen vorliegen. Hinsichtlich der erfindungsgemäßen und hierin beschriebenen Verfahren können diese dabei neben den zwingend vorhandenen Schritten und/oder Stufen weitere optionale Verfahrensschritte und Stufen aufweisen.

Die Menge aller hierin beschriebenen Zusammensetzungen wie den erfindungsgemäßen vulkanisierbaren Kautschukzusammensetzung enthaltenen Bestandteile (umfassend jeweils alle zwingend und zudem alle optionalen Bestandteile) addieren sich insgesamt jeweils auf 100 Gew.-%.

### Vulkanisierbare Kautschukzusammensetzung

Die erfindungsgemäße vulkanisierbare Kautschukzusammensetzung umfasst eine Kautschukkomponente K, eine Füllstoffkomponente F und ein Vulkanisations-System VS, wobei

das Vulkanisations-System VS wenigstens Schwefel und/oder wenigstens einen Schwefelspender umfasst,

die Kautschukkomponente K wenigstens einen Kautschuk enthält, welcher mittels Schwefel vernetzbar ist,

die Füllstoffkomponente F wenigstens einen organischen Füllstoff enthält, welcher einen $^{14}C$-Gehalt in einem

Bereich von 0,20 bis 0,45 Bq/g Kohlenstoff und eine BET-Oberfläche in einem Bereich von 20 bis 150 m²/g, vorzugsweise von >20 bis 150 m²/g, aufweist und

die vulkanisierbare Kautschukzusammensetzung zudem wenigstens ein Organosilan als Teil der Füllstoffkomponente F umfasst, wobei das wenigstens eine Organosilan wenigstens eine hydrolysierbare Gruppe und wenigstens ein Schwefel-Atom aufweist und das wenigstens eine Organosilan vorzugsweise in einer Menge enthalten ist, die in einem Bereich von 0,25 bis 5 phr liegt.

*Kautschukkomponente K*

Die Kautschukkomponente K der erfindungsgemäßen vulkanisierbaren Kautschukzusammensetzung umfasst wenigstens einen Kautschuk, welcher mittels des wenigstens Schwefel umfassenden Vulkanisations-Systems VS vernetzbar ist.

Für die Herstellung der erfindungsgemäßen Kautschukzusammensetzung eignet sich jede Art von Kautschuk, sofern dieser mittels Schwefel vernetzbar ist. Geeignete Kautschuke sind Dienkautschuke, insbesondere Dienkautschuke ausgewählt aus der Gruppe aus Naturkautschuk (NR; natural rubber), synthetischem Naturkautschuk, insbesondere Isoprenkautschuk (IR; isopren rubber), Styrol-Butadien-Kautschuk (SBR; styrene butadiene rubber), lösungspolymerisiertem Styrol-Butadien-Kautschuk (SSBR), emulsionspolymerisiertem Styrol-Butadien-Kautschuk (ESBR), funktionalisiertem SBR, insbesondere funktionalisiertem SSBR, Butadien-Kautschuk (BR; butadien rubber), Chloropren-Kautschuk (CR), Acrylnitril-Butadien-Kautschuk (NBR; nitrile rubber), Isobutylen-Isopren-Kautschuk (IIR; isobuten isoprene rubber), bromiertem Isobutylen-Isopren-Kautschuk (BIIR), chloriertem Isobutylen-Isopren-Kautschuk (CIIR), sowie Mischungen daraus.

Vorzugsweise weist ein funktionalisierter Dienkautschuk wie SSBR eine oder mehrere funktionelle Gruppen in einer oder in mehreren Seitenkette(n) und/oder Endgruppe(n) auf, wobei die wenigstens eine funktionelle Gruppe vorzugsweise ausgewählt ist aus polaren Gruppen, insbesondere ausgewählt ist aus der Gruppe bestehend aus Carboxyl-, Hydroxy-, Amin-, Carbonsäureester-, Carbonsäureamid- oder Sulfonsäuregruppen und Mischungen davon. Funktionalisierter SSBR ist unter anderem aus der Patentanmeldung DE 10 2008 052 116 A1 bekannt.

Vorzugsweise ist der wenigstens eine Kautschuk der Kautschukkomponente K ein Naturkautschuk, lösungspolymerisierter Styrol-Butadien-Kautschuk (SSBR), emulsionspolymerisierter Styrol-Butadien-Kautschuk (ESBR) oder Butadien-Kautschuk oder eine Mischung aus wenigstens zwei der vorgenannten Kautschuke. Besonders bevorzugt ist ein Naturkautschuk als Kautschuk der Kautschukkomponente K.

*Vulkanisations-System VS*

Das Vulkanisations-System VS der erfindungsgemäßen vulkanisierbaren Kautschukzusammensetzung umfasst wenigstens Schwefel und/oder wenigstens einen Schwefelspender. Der Schwefelspender setzt unter Vulkanisationsbedingungen Schwefel frei. Schwefel fungiert als Vernetzungsmittel für Polymere, sowohl wenn dieser direkt im Vulkanisations-System VS enthalten ist als auch nach Freisetzung aus dem eingesetzten Schwefelspender.

Durch die Gegenwart des Vulkanisations-Systems VS und des darin enthaltenen Schwefels und/oder des wenigstens einen Schwefelspenders können die erfindungsgemäßen vulkanisierbaren Kautschukzusammensetzungen vulkanisiert werden.

Für die Schwefelvernetzung verwendet man üblicherweise elementaren Schwefel, der in Form von $S_8$-Ringen vorliegt. Die Öffnung des $S_8$-Ringes erfolgt entweder thermisch oder durch basische Substanzen. Dabei kann der Schwefel als in der Kautschukzusammensetzung löslicher oder unlöslicher Schwefel vorliegen. Als Beschleuniger werden basische organische Verbindungen bezeichnet, die die Ringöffnung aktivieren. Alternativ oder zusätzlich zu elementarem Schwefel kann wenigstens ein Schwefelspender eingesetzt werden. Hierbei wird aus solchen Schwefelspendern erst während der Vulkanisation Schwefel freigegeben. Beispiele für Schwefelspender sind schwefelhaltige chemische Verbindungen wie 4,4'-Dithiomorpholin (DTDM) und Tetramethylthiuramdisulfid (TMTD), die in Dosierungen in einem Bereich von 0,5 bis 2,0 phr eingesetzt werden können, beispielsweise in einer Menge von 1,5 phr (DTDM) oder von 1,0 phr (TMTD).

Der Anteil an Schwefel in der erfindungsgemäßen Kautschukzusammensetzung liegt vorzugsweise in einem Bereich von 0,25 bis 10 phr, besonders bevorzugt 0,25 bis 7 phr, ganz besonders bevorzugt 0,5 bis 5 phr, am meisten bevorzugt 1 bis 3 oder bis 2 phr.

Vorzugsweise umfasst das Vulkanisations-System VS wenigstens einen Beschleuniger für die Schwefelvernetzung. Die vorgenannten Schwefelspender eignen sich dabei ebenfalls als solche Beschleuniger, wenn das Vulkanisations-System VS Schwefel als Vernetzer enthält. Vorzugsweise ist der wenigstens eine Beschleuniger ausgewählt aus der Gruppe bestehend aus Dithiocarbamaten, Xanthogenaten, Thiuramen wie Thiurammonosulfid und/oder Thiuramdisulfid und/oder Tetrabenzylthiuramdisulfid (TbzTD) und/oder Tetramethylthiuramdisulfid (TMTD), Thiazolen wie 2-Mercaptobenzothiazol und/oder Dibenzothiazyldisulfid, Sulfenamiden wie N-Cyclohexyl-2-benzothiazyl-sulfenamid (CBS) und/oder 2-Morpholinothiobenzothiazol und/oder N-tert.-Butyl-2-benzothiazyl-sulfenamid, Guanidinen wie N,N'-Diphenylguanidin, Thioharnstoffen, Dithiophosphaten, Dipentamethylenthiuramtetrasulfid, 4,4'-Dithiodimorpholin (DTDM), Caprolactamdisulfid und Mischungen davon, ganz besonders bevorzugt ausgewählt ist aus der Gruppe bestehend aus N-tert.-Butyl-2-benzothiazyl-sulfenamid, Tetrabenzylthiuramdisulfid und N,N'-Diphenylguanidin sowie Mischungen davon.

Der Anteil des mindestens einen Beschleunigers in der erfindungsgemäßen Kautschukzusammensetzung beträgt vorzugsweise 0,1 bis 10 phr, besonders bevorzugt 0,2 bis 8 phr, ganz besonders bevorzugt 0,2 bis 6 phr, am meisten bevorzugt 0,2 bis 3 phr.

Das Vulkanisations-System VS der erfindungsgemäßen vulkanisierbaren Kautschukzusammensetzung kann ein oder mehrere von Schwefel und/oder Schwefelspendern unterschiedliche Vulkanisatoren und/oder vulkanisationsfördernde Additive enthalten wie Zinkoxid und/oder Fettsäuren wie Stearinsäure.

Das Vulkanisations-System VS der erfindungsgemäßen vulkanisierbaren Kautschukzusammensetzung kann ein oder mehrere Additive enthalten, welche die Vulkanisation fördern, jedoch nicht selbstständig auszulösen vermögen. Zu solchen Additiven zählen beispielsweise Vulkanisationsbeschleuniger wie gesättigte Fettsäuren vorzugsweise mit 12 bis 24, besonders bevorzugt 14 bis 20 und am meisten bevorzugt 16 bis 18 Kohlenstoffatomen wie beispielsweise Stearinsäure und die Zinksalze vorgenannter Fettsäuren.

Werden vulkanisationsfördernde Additive und insbesondere vorgenannte Fettsäuren und/oder deren Zinksalze, vorzugsweise Stearinsäure und/oder Zinkstearat, in den erfindungsgemäßen Kautschukzusammensetzungen eingesetzt, so beträgt deren Anteil vorzugsweise 0 bis 10 phr, besonders bevorzugt 1 bis 8 phr und am meisten bevorzugt 1,5 bis 5 phr.

Das Vulkanisations-System VS der erfindungsgemäßen vulkanisierbaren Kautschukzusammensetzung kann zudem einen oder mehrere weitere von Schwefel und/oder Schwefelspendern verschiedene Vulkanisatoren enthalten, wie vorzugsweise Zinkoxid. Es ist insbesondere bevorzugt, solche Vulkanisatoren des Vulkanisations-Systems VS zusätzlich zu Schwefel und/oder Schwefelspendern einzusetzen.

Werden weitere Vulkanisatoren wie Zinkoxid in den erfindungsgemäßen Kautschukzusammensetzungen eingesetzt, so beträgt deren Anteil vorzugsweise 0 bis 10 phr, besonders bevorzugt 1 bis 8 phr und am meisten bevorzugt 2 bis 5 phr.

Es ist zudem möglich neben dem wenigstens eingesetzten Schwefel und/oder dem wenigstens einen Schwefelspender Peroxid als weiteren Vernetzer dem Vulkanisations-System VS zuzusetzen. Dies ist jedoch nicht bevorzugt.

Die Vulkanisation der Kautschukzusammensetzung der vorliegenden Erfindung erfolgt vorzugsweise unter Verwendung von Schwefel und/oder dem wenigstens einen Schwefelspender, besonders bevorzugt unter Verwendung von Schwefel, in Kombination mit Zinkoxid und/oder wenigstens einer Fettsäure, besonders bevorzugt unter Verwendung von Schwefel und/oder dem wenigstens einen Schwefelspender, ganz besonders bevorzugt unter Verwendung von Schwefel, in Kombination mit Zinkoxid und wenigstens einer Fettsäure.

*Füllstoffkomponente F*

Die Füllstoffkomponente F der erfindungsgemäßen vulkanisierbaren Kautschukzusammensetzung umfasst wenigstens einen organischen Füllstoff. Da der erfindungsgemäß eingesetzte Füllstoff organisch ist, fallen anorganische Füllstoffe wie Fällungskieselsäuren nicht unter diesen Begriff.

Dem Fachmann ist der Begriff des Füllstoffs und insbesondere des organischen Füllstoffs bekannt. Vorzugsweise ist der erfindungsgemäß eingesetzte organische Füllstoff ein Verstärkerfüllstoff, d.h. ein aktiver Füllstoff. Verstärkende bzw. aktive Füllstoffe zeichnen sich gegenüber inaktiven Füllstoffen durch eine höhere spezifische Oberfläche aus und können durch eine Wechselwirkung mit einem Kautschuk innerhalb einer Kautschukzusammensetzung im Gegensatz zu inaktiven (nichtverstärkenden) Füllstoffen die viskoelastischen Eigenschaften des Kautschuks verändern. Beispielsweise können sie die Viskosität der Kautschuke beeinflussen und können das Zug-Dehnungs-Verhalten und Bruchverhalten der Vulkanisate verbessern, beispielsweise im Hinblick auf Reißfestigkeit, Weiterreißwiderstand und Abrieb. Inaktive Füllstoffe verdünnen dagegen die Kautschukmatrix und führen beispielsweise zu einer Reduzierung der Bruchenergie.

Der erfindungsgemäß eingesetzte organische Füllstoff weist einen $^{14}$C-Gehalt in einem Bereich von 0,20 bis 0,45 Bq/g Kohlenstoff, vorzugsweise 0,23 bis 0,42 Bg/g Kohlenstoff, auf. Der oben angegebene erforderliche $^{14}$C-Gehalt wird von organischen Füllstoffen erfüllt, die aus Biomasse durch weitere Behandlung respektive Umsetzung, vorzugsweise Fraktionierung, derselben erhalten werden, wobei die Fraktionierung thermisch, chemisch und/oder biologisch erfolgen kann, vorzugsweise thermisch und chemisch erfolgt. Aus fossilen Materialien wie insbesondere fossilen Brennstoffen erhaltene Füllstoffe fallen somit nicht unter die Definition des erfindungsgemäß einzusetzenden Füllstoffs gemäß der vorliegenden Erfindung, da diese keinen entsprechenden $^{14}$C-Gehalt besitzen.

Als Biomasse wird hierin prinzipiell jegliche Biomasse bezeichnet, wobei der Begriff "Biomasse" hierin sogenannte Phytomasse, das heißt aus Pflanzen stammende Biomasse, Zoomasse, das heißt aus Tieren stammende Biomasse sowie mikrobielle Biomasse, das heißt aus Mikroorganismen einschließlich Pilzen stammende Biomasse umfasst, es sich bei der Biomasse um Trockenbiomasse oder Frischbiomasse handelt, und diese aus toten oder lebenden Organismen stammt. Die hierin zur Herstellung der Füllstoffe besonders bevorzugte Biomasse, ist Phytomasse, vorzugsweise tote Phytomasse. Tote Phytomasse umfasst unter anderem abgestorbene, abgestoßene oder abgetrennte Pflanzen und Bestandteile. Dazu zählen beispielsweise abgebrochene und abgerissene Blätter, Getreidehalme, Seitensprosse, Zweige und Äste, das gefallene Laub, gefällte oder beschnittene Bäume, sowie Samen und Früchte und daraus gewonnene Bestandteile, aber auch Sägemehl, Sägespäne und andere aus der Holzverarbeitung stammende Produkte.

Der erfindungsgemäß eingesetzte organische Füllstoff weist eine BET-Oberfläche (spezifische Gesamtoberfläche nach Brunauer, Emmett und Teller) in einem Bereich von 20 bis 150 m$^2$/g, vorzugsweise in einem Bereich von >20 bis 150 m$^2$/g, besonders bevorzugt in einem Bereich von 25 bis 120 m$^2$/g, insbesondere bevorzugt in einem Bereich von 30 bis 110 m$^2$/g, am meisten bevorzugt in einem Bereich von 40 bis 100 m$^2$/g auf. Eine Methode zur Bestimmung der BET-Oberfläche ist nachstehend im Methodenteil aufgeführt.

Vorzugsweise weist der organische Füllstoff einen Sauerstoffgehalt in einem Bereich von >8 Gew.-% bis <30 Gew.-%, besonders bevorzugt von >10 Gew.-% bis <30 Gew.-%, ganz besonders bevorzugt von >15 Gew.-% bis <30 Gew.-%, am meisten bevorzugt von >20 Gew.-% bis <30 Gew.-% auf, jeweils bezogen auf den aschefreien und wasserfreien Füllstoff. Der Sauerstoffgehalt lässt sich durch Hochtemperaturpyrolyse ermitteln, beispielsweise mit Hilfe des EuroEA3000 CHNS-O Analyzers der Firma EuroVector S.p.A.

Vorzugsweise weist der organische Füllstoff einen Kohlenstoffgehalt in einem Bereich von >60 Gew.-% bis <90 Gew.-%, besonders bevorzugt von >60 Gew.-% bis <85 Gew.-%, ganz besonders bevorzugt von >60 Gew.-% bis <82 Gew.-%, am meisten bevorzugt von >60 Gew.-% bis <80 Gew.-%, aufweist, jeweils bezogen auf den aschefreien und wasserfreien Füllstoff. Eine Methode zur Bestimmung des Kohlenstoffgehalts ist nachstehend im Methodenteil aufgeführt. Dadurch unterscheidet sich der organische Füllstoff sowohl von Rußen wie Industrierußen, die aus fossilen Rohstoffen hergestellt werden, als auch von Rußen, die aus nachwachsenden Rohstoffen hergestellt werden, da Ruße einen entsprechenden Kohlenstoffgehalt von mindestens 95 Gew.-% aufweisen.

Vorzugsweise weist der organische Füllstoff eine STSA-Oberfläche in einem Bereich von >18 bis <150 m$^2$/g, besonders bevorzugt in einem Bereich von 20 bis 130 m$^2$/g, ganz besonders in einem Bereich von 25 bis 120 m$^2$/g, noch bevorzugter in einem Bereich von 30 bis 110 m$^2$/g auf, insbesondere in einem Bereich von 40 bis 100 m$^2$/g, am meisten bevorzugt in einem Bereich von 40 bis <100 m$^2$/g auf. Eine Methode zur Bestimmung der STSA-Oberfläche (Statistical Thickness Surface Area) ist nachstehend im Methodenteil aufgeführt.

Vorzugsweise weist der organische Füllstoff wenigstens eine funktionelle Gruppe auf, die ausgewählt ist aus phenolischen OH-Gruppen, Phenolat-Gruppen, aliphatischen OH-Gruppen, Carbonsäure-Gruppen, Carboxylat-Gruppen und Mischungen davon.

Vorzugsweise ist der erfindungsgemäß eingesetzte organische Füllstoff ein ligninbasierter organischer Füllstoff, der aus Biomasse und/oder Biomassekomponenten hergestellt wird. Beispielsweise kann das Lignin für die Herstellung des ligninbasierten organischen Füllstoffs aus Biomasse isoliert, extrahiert und/oder gelöst werden. Geeignete Verfahren zur Gewinnung des Lignins für die Herstellung des ligninbasierten organischen Füllstoffs aus Biomasse sind beispielsweise Hydrolyseverfahren oder Aufschlussverfahren wie das Kraft-Aufschlussverfahren. Der Ausdruck "auf Lignin basierend" bedeutet im Sinne der vorliegenden Erfindung vorzugsweise, dass in dem erfindungsgemäß eingesetzten organischen Füllstoff ein oder mehrere Lignin-Einheiten und/oder ein oder mehrere Lignin-Gerüste vorhanden sind. Lignine sind feste Biopolymere, die in pflanzliche Zellwände eingelagert werden und so eine Verholzung (Lignifizierung) von Pflanzenzellen bewirken. Sie sind daher in Biomasse und insbesondere in biologisch nachwachsenden Rohstoffen enthalten und stellen daher - insbesondere in hydrothermal behandelter Form - eine umweltfreundliche Füllstoff-Alternative dar.

Vorzugsweise liegt das Lignin und vorzugsweise der erfindungsgemäß eingesetzte organische Füllstoff als solcher, sofern es sich um einen ligninbasierten Füllstoff handelt, zumindest teilweise in hydrothermal behandelter Form vor und ist jeweils besonders bevorzugt mittels hydrothermaler Behandlung erhältlich. Besonders bevorzugt basiert der erfindungsgemäß eingesetzte organische Füllstoff auf mittels hydrothermaler Behandlung erhältlichem Lignin. Geeignete Verfahren der hydrothermalen Behandlung insbesondere von Ligninen und Lignin-haltigen organischen Füllstoffen sind zum Beispiel in WO 2017/085278 A1 und WO 2017/194346 A1 sowie in EP 3 470 457 A1 beschrieben. Vorzugsweise wird die hydrothermale Behandlung bei Temperaturen >100 °C bis <300 °C, besonders bevorzugt von >150 °C bis <250 °C, in Gegenwart von flüssigem Wasser durchgeführt. Vorzugsweise ist der organische Füllstoff ein ligninbasierter Füllstoff, wobei vorzugsweise zumindest das Lignin und noch bevorzugter der organische Füllstoff als solcher zumindest teilweise in einer mittels hydrothermalen Behandlung erhältlichen Form vorliegt, besonders bevorzugt mittels hydrothermaler Behandlung erhältlich ist, wobei die hydrothermale Behandlung vorzugsweise bei einer Temperatur in einem Bereich von >100 °C bis <300 °C, besonders bevorzugt von >150 °C bis <250 °C, durchgeführt worden ist.

Vorzugsweise weist der organische Füllstoff einen pH-Wert in einem Bereich von 7 bis 9, besonders bevorzugt in einem Bereich von >7 bis <9, ganz besonders bevorzugt in einem Bereich von >7,5 bis <8,5 auf.

Der erfindungsgemäß eingesetzte organische Füllstoff weist vorzugsweise einen d99-Wert von <25 µm, noch

bevorzugter <20 μm, besonders bevorzugt <18 μm, ganz besonders bevorzugt <15 μm, noch bevorzugter <12 μm, noch bevorzugter <10 μm, noch bevorzugter <9 μm, noch bevorzugter <8 μm, auf. Die Methode zur Bestimmung des d99-Werts ist nachstehend im Methodenteil beschrieben und erfolgt mittels Laserbeugung nach ISO 13320:2009. Die nachstehend genannten d90- und d25-Werte werden gleichermaßen so bestimmt. Dem Fachmann ist dabei klar, dass der erfindungsgemäß eingesetzte organische Füllstoff in Form von Teilchen vorliegt und die mittlere Teilchengröße (mittlere Korngröße) dieser Teilchen durch den vorgenannten d99-Wert und die ebenfalls genannten d90- und d25-Werte beschrieben wird/werden.

Besonders bevorzugt weist der erfindungsgemäß eingesetzte organische Füllstoff einen d99-Wert von <9 μm, noch bevorzugter von <8 μm, auf, vorzugsweise jeweils bestimmt mittels Laserbeugung nach ISO 13320:2009.

Vorzugsweise weist der organische Füllstoff einen d90-Wert von <7,0 μm, besonders bevorzugt von <6,0 μm, auf, und/oder weist vorzugsweise einen d25-Wert von <3,0 μm, besonders bevorzugt von <2,0 μm, auf, vorzugsweise jeweils bestimmt mittels Laserbeugung nach ISO 13320:2009.

Vorzugsweise enthält die erfindungsgemäße Kautschukzusammensetzung den wenigstens einen organischen Füllstoff in einer Menge, die in einem Bereich von 1 bis 150 phr, besonders bevorzugt von 5 bis 100 phr, ganz besonders bevorzugt von 10 bis 80 phr, noch bevorzugter von 15 bis 70 phr, am meisten bevorzugt von 15 bis 60 phr, liegt.

Die hierin verwendete Angabe phr (parts per hundred parts of rubber by weight) ist die in der Kautschukindustrie übliche Mengenangabe für Mischungsrezepturen. Die Dosierung der Gewichtsteile der einzelnen Bestandteile wird dabei stets auf die 100 Gewichtsteile der gesamten Masse aller in der Mischung vorhandenen Kautschuke bezogen.

Neben dem wenigstens einen erfindungsgemäß eingesetzten organischen Füllstoff kann die Füllstoffkomponente F einen oder mehrere weitere, von dem erfindungsgemäß eingesetzten organischen Füllstoff verschiedene Füllstoff(e) enthalten.

Für den Fall, dass der erfindungsgemäß eingesetzte organische Füllstoff nur als Teilersatz üblicher Industrieruße dient, können die erfindungsgemäßen Kautschukzusammensetzungen auch Industrieruße, insbesondere Furnace-Ruße enthalten wie sie beispielsweise unter dem ASTM-Code N660 oder unter dem ASTM-Code N550 als Allzweckruße eingestuft sind.

Zusätzlich oder alternativ können die erfindungsgemäßen Kautschukzusammensetzungen insbesondere anorganische Füllstoffe enthalten, beispielsweise unterschiedlicher Teilchengröße, Teilchenoberfläche und chemischer Natur mit unterschiedlichem Potenzial, um spezifische Eigenschaften, insbesondere aber das Verarbeitungsverhalten (Rheologie) zu beeinflussen. Für den Fall, dass weitere Füllstoffe enthalten sind, sollten diese vorzugsweise möglichst ähnliche Eigenschaften besitzen wie die in der erfindungsgemäßen Kautschukzusammensetzung eingesetzten organischen Füllstoffe, insbesondere in Bezug auf deren pH-Wert.

Werden weitere Füllstoffe eingesetzt, so handelt es sich hierbei vorzugsweise um Schichtsilikate wie Tonminerale, beispielsweise Talk; Carbonate wie Calciumcarbonat; Silikate wie beispielsweise Calcium-, Magnesium- und Aluminiumsilikat; und Oxide wie beispielsweise Magnesiumoxid und Silica bzw. Kieselsäure.

Insbesondere für den Fall, dass der erfindungsgemäß eingesetzte organische Füllstoff nur als Teilersatz üblicher Kieselsäuren bzw. von Silica dient, können die erfindungsgemäßen Kautschukzusammensetzungen auch solche anorganischen Füllstoffe wie Silica bzw. Kieselsäure enthalten.

Im Rahmen der vorliegenden Erfindung zählt Zinkoxid jedoch nicht zu den anorganischen Füllstoffen, da Zinkoxid die Aufgabe eines vulkanisationsfördernden Additivs zukommt. Zusätzliche Füllstoffe sind jedoch mit Bedacht zu wählen, da beispielsweise Silica dazu tendiert organische Moleküle an seine Oberfläche zu binden und damit deren Wirkung zu inhibieren.

*Organosilan*

Das wenigstens eine Organosilan der erfindungsgemäßen, vulkanisierbaren Kautschukzusammensetzung weist wenigstens eine hydrolysierbare Gruppe und wenigstens ein Schwefel-Atom auf. Vorzugsweise ist das wenigstens eine Schwefel-Atom Teil eines nicht hydrolysierbaren organischen Restes des Organosilans oder an einen solchen Rest in Form einer funktionellen Gruppe wie einer Thiol-gruppe kovalent gebunden, insbesondere ist das wenigstens eine Schwefel-Atom Teil eines organischen aliphatischen Restes des Organosilans oder an einen solchen aliphatischen Rest in Form einer funktionellen Gruppe wie einer Thiol-gruppe kovalent gebunden.

Vorzugsweise ist das wenigstens eine Organosilan der erfindungsgemäßen vulkanisierbaren Kautschukzusammensetzung eine Verbindung der allgemeinen Formel (I) und/oder (II)

$$Si(X)_{4-y}(R)_y \qquad (I),$$

$$(X)_{3-z}(T)_z Si\text{-}(RA)\text{-}Si(X)_{3-z}(T)_z \qquad (II)$$

wobei im Fall von der allgemeinen Formel (I)

X jeweils unabhängig voneinander für eine hydrolysierbare und gegenüber phenolischen OH-Gruppen, Phenolat-Gruppen, aliphatischen OH-Gruppen, Carbonsäure-Gruppen, Carboxylat-Gruppen und/oder Mischungen dieser Gruppen reaktive funktionelle Gruppe steht, die vorzugsweise jeweils unabhängig voneinander eine Alkoxygruppe darstellt, besonders bevorzugt ausgewählt ist aus $O-C_{1-4}$-Alkyl,

der Parameter y für eine ganze Zahl im Bereich von 1 bis 3 steht, jedoch mindestens 1 beträgt, vorzugsweise genau für 1 steht, und

R für einen nicht-hydrolysierbaren organischen Rest steht, vorzugsweise für einen $C_3$- bis $C_{20}$-aliphatischen Rest, der mindestens ein Schwefel-Atom aufweist, wobei das Schwefel-Atom vorzugsweise Teil mindestens einer funktionellen Gruppe ist, welche vorzugsweise ausgewählt ist aus der Gruppe bestehend aus Thiolgruppen, blockierten Thiolgruppen, Di- und/oder Polysulfid-Gruppen wie Tetrasulfid-Gruppen, sowie Mischungen davon, ganz besonders bevorzugt Thiolgruppen,

wobei im Fall der allgemeinen Formel (II)

X jeweils unabhängig voneinander für eine hydrolysierbare und gegenüber phenolischen OH-Gruppen, Phenolat-Gruppen, aliphatischen OH-Gruppen, Carbonsäure-Gruppen, Carboxylat-Gruppen und/oder Mischungen dieser Gruppen reaktive funktionelle Gruppe steht, die vorzugsweise unabhängig voneinander eine Alkoxygruppe darstellt, besonders bevorzugt ausgewählt ist aus $O-C_{1-4}$-Alkyl,

RA für einen zweibindigen nicht-hydrolysierbaren organischen Rest steht, vorzugsweise einen zweibindigen $C_6$- bis $C_{20}$-aliphatischen Rest darstellt, der mindestens ein Schwefel Atom, vorzugsweise mindestens eine Disulfid- und/oder Polysulfid-Gruppe, besonders bevorzugt eine Di- oder Tetrasulfid-Gruppe aufweist,

der Parameter z jeweils für eine ganze Zahl im Bereich von 0 bis 2 steht, vorzugsweise jeweils 0 oder 2 bedeutet, und

T für einen nicht-hydrolysierbaren organischen Rest steht, der von dem Rest RA verschieden ist und keine funktionellen Gruppen aufweist und vorzugsweise ein $C_1$- bis $C_{20}$-aliphatischer Rest ist, besonders bevorzugt kein Schwefel-Atom enthält.

Im Fall von Monosilanen der allgemeinen Formel (I) ist es bevorzugt, dass mindestens ein Rest R eine Mercaptoalkylgruppe ist, wobei R vorzugsweise ein $C_3$- bis $C_8$-aliphatischer Rest, besonders bevorzugt ein $C_3$- bis $C_6$-aliphatischer Rest ist, und dass das Monosilan wenigstens eine Gruppe X, vorzugsweise zwei oder drei Gruppen X aufweist.

Vorzugsweise ist das Monosilan der allgemeinen Formel (I) ausgewählt aus der Gruppe bestehend aus 4-Mercaptobutyltrialkoxysilan und/oder 6-Mercaptohexyltrialkoxysilan und/oder 3-Mercaptopropyltrialkoxysilan, wobei Alkoxygruppen vorzugsweise unabhängig voneinander Methoxy- oder Ethoxygruppen bedeuten.

Vorzugsweise ist das wenigstens eine Organosilan eine Verbindung der allgemeinen Formel (II).

Im Fall von Bis(Silanen) der allgemeinen Formel (II) ist es bevorzugt, wenn der nicht hydrolysierbare organische Rest RA ein $C_6$- bis $C_{20}$-aliphatischer Rest, besonders bevorzugt ein $C_6$- bis $C_{10}$-aliphatischer Rest ist, und RA wenigstens ein Schwefel-Atom aufweist. Besonders bevorzugt weist RA eine Di- oder Polysulfid-Gruppe, ganz besonders bevorzugt eine Di- oder Tetrasulfid-Gruppe auf. Vorzugsweise liegt das wenigstens eine Schwefel-Atom innerhalb des Restes RA vor, besonders bevorzugt grenzt das wenigstens eine Schwefel-Atom nicht an ein Silicium-Atom.

Vorzugsweise enthält das Bis(Silan) der allgemeinen Formel (II) wenigstens eine Gruppe X, besonders bevorzugt zwei oder drei Gruppen X.

Vorzugsweise ist das Bis(Silan) der allgemeinen Formel (II) ausgewählt aus der Gruppe bestehend aus Bis(dimethylethoxysilylpropyl)tetrasulfid (DMESPT), Bis(dimethylethoxysilylpropyl)disulfid (DMESPD), Bis(triethoxysilylpropyl)tetrasulfid (TESPT), Bis(triethoxysilylpropyl)disulfid (TESPD) und Mischungen davon, besonders bevorzugt ist das Bis(Silan) der allgemeinen Formel (II) TESPT und/oder TESPD, am meisten bevorzugt ist TESPD.

Vorzugsweise ist das wenigstens eine Organosilan in der erfindungsgemäßen vulkanisierbaren Kautschukzusammensetzung in einer Menge enthalten, die in einem Bereich von 0,25 bis 7 phr, besonders bevorzugt 0,25 bis 5 phr, ganz besonders bevorzugt 0,5 bis 3 phr, liegt.

Vorzugsweise ist das wenigstens eine Organosilan in der erfindungsgemäßen vulkanisierbaren Kautschukzusammensetzung in einer Menge enthalten, die bezogen auf den darin enthaltenen organischen Füllstoff, in einem Bereich von 1 bis 10 Gew.-%, besonders bevorzugt 2 bis 8 Gew.-%, ganz besonders bevorzugt 2,5 bis 6 Gew.-%, am meisten bevorzugt 3 bis 6 oder bis 5 Gew.-%, liegt.

*Weitere Bestandteile der vulkanisierbaren Kautschukzusammensetzung*

Die erfindungsgemäße Kautschukzusammensetzung kann weitere optionale Bestandteile enthalten wie Weichmacher und/oder Antidegradationsmittel und/oder Lichtschutzwachse und/oder Harze, insbesondere die Haftfähigkeit erhöhende Harze.

Durch den Einsatz von Weichmachern lassen sich insbesondere Eigenschaften der nicht-vulkanisierten Kautschukzusammensetzung wie die Verarbeitbarkeit, aber auch Eigenschaften der vulkanisierten Kautschukzusammensetzung wie deren Flexibilität, insbesondere bei niedrigen Temperaturen beeinflussen. Besonders geeignete Weichmacher sind im Rahmen der vorliegenden Erfindung Mineralöle aus der Gruppe der paraffinischen Öle (im Wesentlichen gesättigte kettenförmige Kohlenwasserstoffe) und naphthenische Öle (im Wesentlichen gesättigte ringförmige Kohlenwasserstoffe). Der Einsatz aromatischer Kohlenwasserstoff-Öle ist ebenso möglich und sogar bevorzugt. Vorteilhaft kann jedoch auch eine Mischung aus paraffinischer und/oder naphthenischer Öle mit aromatischen Ölen als Weichmacher in Bezug auf die Haftung der Kautschukzusammensetzung an andere kautschukenthaltende Komponenten in Reifen sein, wie beispielsweise die Karkasse. Weitere mögliche Weichmacher sind beispielsweise Ester aliphatischer Dicarbonsäuren wie beispielsweise der Adipinsäure oder Sebacinsäure, Paraffinwachse und Polyethylenwachse. Unter den Weichmachern sind im Rahmen der vorliegenden Erfindung besonders die paraffinischen Öle und naphthenischen Öle geeignet, am meisten bevorzugt sind jedoch aromatische Öle, insbesondere aromatische Mineralöle.

Vorzugsweise werden Weichmacher und besonders bevorzugt hierunter die paraffinischen und/oder naphthenischen und insbesondere aromatischen Prozessöle in einer Menge von 0 bis 10 phr, besonders bevorzugt 1 bis 8 phr, ganz besonders bevorzugt 1 bis 7 phr, am meisten bevorzugt 1 bis 3 phr eingesetzt.

Vorzugsweise werden als Antidegradantien Chinoline wie TMQ (2,2,4-Trimethyl-1,2-dihydrochinolin) und Diamine wie 6-PPD (N-(1,3-dimethylbutyl)-N'-Phenyl-p-Phenylendiamin) oder IPPD (N-Isopropyl-N'-phenyl-p-phenylendiamin), besonders bevorzugt IPPD verwendet. Vorzugsweise beträgt deren Anteil 1 bis 10 phr, besonders bevorzugt 1 bis 7 phr, ganz besonders bevorzugt 1 bis 5 phr, am meisten bevorzugt 1 bis 2 phr.

Beispiele von Lichtschutzwachsen sind Negozone 3457 von H&R Group oder Antilux Lichtschutzwachse der Firma Rhein Chemie wie Antilux 111 oder Antilux 654. Vorzugsweise beträgt deren Anteil 0,25 bis 10 phr, besonders bevorzugt 0,5 bis 7 phr, ganz besonders bevorzugt 0,5 bis 5 phr, am meisten bevorzugt 0,5 bis 2 phr.

Zur Verbesserung der Haftfähigkeit der vulkanisierten Kautschukmischung der vorliegenden Erfindung an andere benachbarte Reifenbestandteile können sogenannte, die Haftfähigkeit erhöhende Harze eingesetzt werden. Besonders geeignete Harze sind solche auf Phenolbasis, vorzugsweise aus der Gruppe bestehend aus phenolischen Harzen, Phenol-Formaldehyd-Harzen und Phenol-Acetylen-Harzen. Neben den Harzen auf Phenolbasis können auch aliphatische Kohlenwasserstoffharze wie beispielsweise Escorez™ 1102 RM der Firma ExxonMobil, aber auch aromatische Kohlenwasserstoffharze, eingesetzt werden. Aliphatische Kohlenwasserstoffharze verbessern insbesondere die Haftfähigkeit gegenüber anderen Kautschuk-Komponenten des Reifens. Sie besitzen in der Regel eine geringere Haftfähigkeit als die Harze auf Phenolbasis und können alleine oder in Mischung mit den Harzen auf Phenolbasis eingesetzt werden.

Werden die Haftfähigkeit erhöhende Harze eingesetzt, dann vorzugsweise solche, gewählt aus der Gruppe bestehend aus Harzen auf Phenolbasis, aromatischen Kohlenwasserstoffharzen und aliphatische Kohlenwasserstoffharzen. Vorzugsweise beträgt deren Anteil 0 bis 15 phr, besonders bevorzugt 1 bis 15 phr, ganz besonders bevorzugt 2 bis 10 phr und am meisten bevorzugt 3 bis 8 phr.

*Kit-of-parts*

Ein weiterer Gegenstand der vorliegenden Erfindung ist ein Kit-of-parts umfassend, vorzugsweise bestehend aus, in räumlich getrennter Form

als Teil (A) eine Kautschukzusammensetzung, die wenigstens die erfindungsgemäß eingesetzte Kautschukkomponente K und wenigstens die erfindungsgemäß eingesetzte Füllstoffkomponente F umfasst, wobei Teil (A) jedoch nicht Schwefel und/oder den wenigstens einen Schwefelspender des erfindungsgemäß eingesetzten Vulkanisations-Systems VS umfasst, und

als Teil (B) ein erfindungsgemäß eingesetztes Vulkanisations-System VS umfassend wenigstens Schwefel und/oder wenigstens einen Schwefelspender,

wobei das erfindungsgemäß eingesetzte Organosilan in der Füllstoffkomponente F in Teil (A) vorzugsweise in einer Menge enthalten ist, die in einem Bereich von 0,25 bis 5 phr liegt.

Teil (A) ist somit als solcher noch nicht mittels Schwefel vulkanisierbar und stellt somit zu diesem Zeitpunkt eine mittels Schwefel nicht vulkanisierbare Kautschukzusammensetzung dar. Die Vulkanisation mittels Schwefel ist erst nach Zusammenmischen der Teile (A) und (B) möglich, unabhängig davon, ob dieser in Form von Schwefel per se enthalten ist und/oder aus dem wenigstens einen Schwefelspender freigesetzt wird.

Vorzugsweise sind im Kit-of-parts die Komponenten K und F der erfindungsgemäßen Kautschukzusammensetzung einerseits und das Vulkanisations-System VS andererseits räumlich voneinander getrennt und können so gelagert werden. Das Kit-of-parts dient der Herstellung einer vulkanisierbaren Kautschukzusammensetzung. So kann beispielsweise die den einen Teil der Kit-of-parts ausmachende Kautschukzusammensetzung umfassend Komponenten K und F und gegebenenfalls weitere Bestandteile einschließlich von Schwefel unterschiedliche Vulkanisatoren wie Zinkoxid und/oder wenigstens eine Fettsäure als Teil (A) in Stufe 1 des weiter unten beschriebenen Verfahrens zur Herstellung einer vulkanisierbaren Kautschukmischung eingesetzt werden und der zweite Teil des Kit-of-parts, nämlich das Vulkanisations-System VS als Teil (B) umfassend wenigstens Schwefel und/oder wenigstens einen Schwefelspender, in Stufe 2 des besagten Verfahrens eingesetzt werden, wobei das erfindungsgemäß eingesetzte Organosilan in der Füllstoffkomponente F in Teil (A) enthalten ist.

Im Gegensatz zur vulkanisierbaren Kautschukzusammensetzung, die sowohl die Bestandteile K, F und ein Organosilan, welches wenigstens eine hydrolysierbare Gruppe und wenigstens ein Schwefel-Atom aufweist, der erfindungsgemäßen Kautschukzusammensetzung als auch das zugehörige Vulkanisations-System VS umfassend wenigstens Schwefel und/oder wenigstens einen Schwefelspender vorzugsweise homogen vermischt enthält, so dass die vulkanisierbare Kautschukzusammensetzung direkt vulkanisiert werden kann, sind im erfindungsgemäßen Kit-of-parts die Kautschukzusammensetzung umfassend die Komponenten K, F und vorzugsweise das Organosilan, welches wenigstens eine hydrolysierbare Gruppe und wenigstens ein Schwefel-Atom aufweist und das Vulkanisations-System VS umfassend wenigstens Schwefel und/oder wenigstens einen Schwefelspender somit räumlich voneinander getrennt.

Alle im Zusammenhang mit der erfindungsgemäßen vulkanisierbaren Kautschukzusammensetzung hierin zuvor beschriebenen bevorzugten Ausführungsformen sind auch bevorzugte Ausführungsformen hinsichtlich des erfindungsgemäßen Kit-of-parts.

Vorzugsweise umfasst das erfindungsgemäße Kit-of-parts als

Teil (A) eine Kautschukzusammensetzung umfassend wenigstens die Komponenten K, F und ein Organosilan, welches wenigstens eine hydrolysierbare Gruppe und wenigstens ein Schwefel-Atom aufweist und als Teil (B) ein Vulkanisations-System VS umfassend wenigstens Schwefel und/oder wenigstens einen Schwefelspender und zudem Zinkoxid, wobei Zinkoxid alternativ innerhalb von Teil (A) vorliegen kann.

Besonders bevorzugt umfasst das erfindungsgemäße Kit-of-parts als

Teil (A) eine Kautschukzusammensetzung umfassend wenigstens die Komponenten K, F und ein Organosilan, welches wenigstens eine hydrolysierbare Gruppe und wenigstens ein Schwefel-Atom aufweist und als Teil (B) ein Vulkanisations-System umfassend wenigstens Schwefel und/oder wenigstens einen Schwefelspender, ein Zinkoxid und wenigstens eine gesättigte Fettsäure wie Stearinsäure und/oder gegebenenfalls Zinkstearat, wobei zumindest Zinkoxid und/oder die Fettsäure alternativ innerhalb von Teil (A) vorliegen kann/können.

*Verfahren zur Herstellung der vulkanisierbaren Kautschukzusammensetzung*

Ein weiterer Gegenstand der vorliegenden Erfindung ist ein Verfahren zur Herstellung der vulkanisierbaren erfindungsgemäßen Kautschukzusammensetzung.

Alle im Zusammenhang mit der erfindungsgemäßen vulkanisierbaren Kautschukzusammensetzung und dem erfindungsgemäßen Kit-of-parts hierin zuvor beschriebenen bevorzugten Ausführungsformen sind auch bevorzugte Ausführungsformen hinsichtlich des erfindungsgemäßen Verfahrens.

Die Herstellung der erfindungsgemäßen vulkanisierbaren Kautschukzusammensetzung erfolgt vorzugsweise zweistufig in den Stufen 1 und 2.

In der ersten Stufe (Stufe 1) wird zunächst eine Kautschukzusammensetzung als Grundmischung (Masterbatch) hergestellt, indem alle Bestandteile, die zur Herstellung der erfindungsgemäßen vulkanisierbaren Kautschukzusammensetzung eingesetzt werden miteinander vermischt werden, jedoch mit Ausnahme des Schwefels und/oder des wenigstens einen Schwefelspenders. In der zweiten Stufe (Stufe 2) erfolgt die Zumischung des Schwefels und/oder des wenigstens einen Schwefelspenders und gegebenenfalls zusätzlicher Bestandteile des Vulkanisations-Systems VS zu der nach Stufe 1 erhaltenen Kautschukzusammensetzung.

*Stufe 1*

Vorzugsweise wird der wenigstens eine Kautschuk, der in der Kautschukkomponente K der erfindungsgemäßen Kautschukzusammensetzung enthalten ist, sowie gegebenenfalls einsetzbare davon verschiedene Harze vorgelegt. Letztere können jedoch auch alternativ im Anschluss mit weiteren Additiven zugegeben werden. Vorzugsweise besitzen die Kautschuke mindestens Raumtemperatur (23 °C) oder werden besonders bevorzugt vorgewärmt auf Temperaturen von maximal 50 °C, ganz besonders bevorzugt maximal 45 °C und insbesondere bevorzugt maximal 40 °C eingesetzt. Besonders bevorzugt werden die Kautschuke für einen kurzen Zeitraum vorgeknetet, bevor die anderen Bestandteile zugegeben werden. Werden zur späteren Vulkanisationskontrolle Inhibitoren eingesetzt wie beispielsweise Magnesiumoxid, so werden diese vorzugsweise ebenfalls zu diesem Zeitpunkt zugegeben.

Anschließend wird wenigstens ein erfindungsgemäß eingesetzter organischer Füllstoff und gegebenenfalls weitere Füllstoffe zugegeben, vorzugsweise mit Ausnahme von Zinkoxid, da dieses wie vorstehend erwähnt in den erfindungsgemäßen Kautschukzusammensetzungen als Bestandteil des Vulkanisations-Systems VS zum Einsatz kommt und daher hierin nicht als Füllstoff betrachtet wird. Die Zugabe des wenigstens einen organischen Füllstoffs und gegebenenfalls weiterer Füllstoffe erfolgt vorzugsweise inkrementell.

Vorteilhaft, jedoch nicht zwingend, werden Weichmacher, das erfindungsgemäß eingesetzte Organosilan und andere Bestandteile wie von Schwefel unterschiedliche Vulkanisatoren wie Stearinsäure und/oder Zinkstearat und/oder Zinkoxid erst im Anschluss an die Zugabe des wenigstens einen organischen Füllstoffs beziehungsweise der weiteren Füllstoffe, sofern verwendet, zugegeben. Hierdurch wird die Einarbeitung des wenigstens einen organischen Füllstoffs und sofern vorhanden der weiteren organischen Füllstoffe erleichtert. Es kann jedoch von Vorteil sein, einen Teil des wenigstens einen organischen Füllstoffs oder sofern vorhanden der weiteren Füllstoffe zusammen mit den Weichmachern und den gegebenenfalls eingesetzten weiteren Bestandteilen einzuarbeiten.

Die höchsten, bei der Herstellung der Kautschukzusammensetzung in der ersten Stufe erhaltenen Temperaturen ("dump temperature"), sollten 170 °C nicht überschreiten, da oberhalb dieser Temperaturen eine teilweise Zersetzung der reaktiven Kautschuke und/oder der organischen Füllstoffe möglich ist. Möglich sind aber insbesondere in Abhängigkeit vom eingesetzten Kautschuk auch Temperaturen von >170 °C, beispielsweise bis zu 200 °C. Vorzugsweise beträgt die Höchsttemperatur bei der Herstellung der Kautschukzusammensetzung der ersten Stufe zwischen 80 °C und <200 °C, besonders bevorzugt zwischen 90 °C und 190 °C, am meisten bevorzugt zwischen 95 °C und 170 °C.

Die Mischung der Bestandteile der Kautschukzusammensetzung erfolgt üblicherweise mittels Innenmischern, die mit tangierenden oder kämmenden (das heißt ineinandergreifenden) Rotoren ausgestattet sind. Letztere erlauben in der Regel eine bessere Temperatursteuerung. Mischer mit tangierenden Rotoren werden auch als Tangentialmischer bezeichnet. Die Mischung kann jedoch beispielsweise auch unter Verwendung eines Doppelwalzenmischers erfolgen. Je nach verwendetem Kautschuk kann der Mischprozess konventionell, beginnend mit der Zugabe des Polymers oder Upside-down, also nach Zugabe aller anderen Mischungsbestandteile am Ende erfolgen.

Nach erfolgter Herstellung der Kautschukzusammensetzung wird diese vorzugsweise vor Durchführung der zweiten Stufe abgekühlt. Ein derartiges Verfahren wird auch als Relaxation bezeichnet. Typische Relaxationszeiträume betragen 6 bis 24 Stunden, vorzugsweise 12 bis 24 Stunden.

*Stufe 2*

In der zweiten Stufe wird in die Kautschukzusammensetzung der ersten Stufe wenigstens Schwefel und/oder wenigstens ein Schwefelspender, vorzugsweise aber zusätzliche weitere Bestandteile des Vulkanisations-Systems VS eingearbeitet, wodurch eine vulkanisierbare Kautschukzusammensetzung gemäß der vorliegenden Erfindung erhalten wird. Vorzugsweise werden in Stufe 2 ebenfalls die Beschleuniger für die Schwefelvernetzung eingearbeitet, sofern vorhanden/genutzt.

Wird als Vulkanisations-System neben Schwefel und/oder dem wenigstens einen Schwefelspender zudem Zinkoxid und zudem optional wenigstens eine gesättigte Fettsäure wie Stearinsäure eingesetzt, so kann in Stufe 2 die Zugabe aller dieser Bestandteile erfolgen. Es ist jedoch auch möglich, diese Bestandteile mit Ausnahme des Schwefels und/oder des wenigstens einen Schwefelspenders bereits in Stufe 1 in die Kautschukzusammensetzung zu integrieren.

Die höchsten, bei der Herstellung der Zumischung des Vulkanisations-Systems zur Kautschukzusammensetzung in der zweiten Stufe erhaltenen Temperaturen ("dump temperature"), sollten vorzugsweise 130 °C, besonders bevorzugt 125 °C, nicht überschreiten. Ein bevorzugter Temperaturbereich liegt zwischen 70 °C und 125 °C, besonders bevorzugt zwischen 80 °C und 120 °C. Bei Temperaturen oberhalb der für das Vernetzungssystem maximalen Temperaturen von 105 °C bis 120 °C kann es zu einer vorzeitigen Vulkanisation kommen.

Nach erfolgter Zumischung des Vulkanisations-Systems in Stufe 2 wird die Zusammensetzung vorzugsweise abgekühlt.

Im vorgenannten zweistufigen Verfahren wird somit zunächst in der ersten Stufe eine Kautschukzusammensetzung erhalten, die in der zweiten Stufe zu einer vulkanisierbaren Kautschukzusammensetzung erweitert wird.

*Verfahren zur Weiterverarbeitung der erfindungsgemäßen vulkanisierbaren Kautschukzusammensetzung*

Die hergestellten vulkanisierbaren Kautschukzusammensetzungen durchlaufen vor der Vulkanisation vorzugsweise auf die Endartikel abgestimmte Verformungsprozesse. Die Kautschukzusammensetzungen werden vorzugsweise mittels Extrusion bzw. Kalandrieren in eine geeignete Form gebracht, die für den Vulkanisationsprozess nötig ist. Dabei kann die Vulkanisation in Vulkanisationsformen über Druck und Temperatur erfolgen oder die Vulkanisation erfolgt drucklos in temperierten Kanälen, in denen Luft oder flüssige Materialien für den Wärmeübergang sorgen.

*Vulkanisierte Kautschukzusammensetzung*

Ein weiterer Gegenstand der vorliegenden Erfindung ist eine vulkanisierte Kautschukzusammensetzung, welche erhältlich ist durch Vulkanisation der erfindungsgemäßen vulkanisierbaren Kautschukzusammensetzung oder durch Vulkanisation einer durch Zusammengeben und Vermischen der beiden Teile (A) und (B) des erfindungsgemäßen Kit-of-parts erhältlichen vulkanisierbaren Kautschkzusammensetzung.

Alle im Zusammenhang mit der erfindungsgemäßen vulkanisierbaren Kautschkzusammensetzung und dem erfindungsgemäßen Kit-of-parts sowie dem erfindungsgemäßen Verfahren hierin zuvor beschriebenen bevorzugten Ausführungsformen sind auch bevorzugte Ausführungsformen hinsichtlich der erfindungsgemäßen vulkanisierten Kautschkzusammensetzung.

Üblicherweise wird unter Druck und/oder Hitzeeinwirkung vulkanisiert. Geeignete Vulkanisationstemperaturen betragen vorzugsweise 100 °C bis 200 °C, besonders bevorzugt 120 °C bis 180 °C und am meisten bevorzugt 140 °C bis 170 °C. Optional erfolgt die Vulkanisation bei einem Druck im Bereich von 50 bar bis 300 bar. Es ist jedoch auch möglich, die Vulkanisation in einem Druckbereich von 0,1 bar bis 1 bar durchzuführen, beispielsweise im Fall von Profilen. Der Schließdruck der Presse liegt je nach Mischung und Produktgeometrie üblicherweise in einem Bereich von 150 bar bis 500 bar.

*Verwendung*

Ein weiterer Gegenstand der vorliegenden Erfindung ist eine Verwendung der erfindungsgemäßen vulkanisierbaren Kautschkzusammensetzung, des erfindungsgemäßen Kit-of-parts oder der erfindungsgemäßen vulkanisierten Kautschkzusammensetzung zum Einsatz bei der Herstellung von Reifen, vorzugsweise bei der Herstellung von Luftreifen und Vollgummireifen, und Reifenkomponenten, vorzugsweise bei der Herstellung von solchen Reifenkomponenten, für die ein möglichst geringer tan delta Wert der zu ihrer Herstellung eingesetzten vulkanisierten Kautschkzusammensetzungen anvisiert ist, wie beispielsweise Kautschkzusammensetzungen umfassend Naturkautschuk(e) und/oder Kautschuke mit einer niedrigen Glasübergangstemperatur $T_g$, insbesondere bei der Herstellung von Reifenkomponenten ausgewählt aus der Gruppe aus Basis-Komponenten (base), d.h. Komponenten unterhalb der Lauffläche, Schulterstreifen (wing), Gürtelabdeckbändern (cap-ply), Gürteln (belt), Wulstkernen (bead) und/oder Wulstverstärkungen, oder zum Einsatz bei der Herstellung von Gummiartikeln wie technischen Gummiartikeln, vorzugsweise von Antriebsriemen, Gurten, Formteilen wie Puffern, Lagern, insbesondere Hydrolagern, Transportbändern, Profilen, Dichtungen, Ringen und/oder Schläuchen.

Der Begriff "technische Gummiartikel" (englisch: mechanical rubber goods, MRG) ist dem Fachmann bekannt. Beispiele technischer Gummiartikel sind Antriebsriemen, Gurte, Formteile wie Puffer, Lager, insbesondere Hydrolager, Transportbänder, Profile, Dichtungen, Dämpfer und/oder Schläuche.

Alle im Zusammenhang mit der erfindungsgemäßen vulkanisierbaren Kautschkzusammensetzung, dem erfindungsgemäßen Kit-of-parts, dem erfindungsgemäßen Verfahren und der erfindungsgemäßen vulkanisierten Kautschkzusammensetzung hierin zuvor beschriebenen bevorzugten Ausführungsformen sind auch bevorzugte Ausführungsformen hinsichtlich der vorgenannten erfindungsgemäßen Verwendung.

*Reifen und Reifenkomponenten*

Ein weiterer Gegenstand der vorliegenden Erfindung ist ein Reifen, vorzugsweise ein Luftreifen oder Vollgummireifen, oder eine Reifenkomponente, hergestellt jeweils unter Einsatz der erfindungsgemäßen vulkanisierbaren Kautschkzusammensetzung, des erfindungsgemäßen Kit-of-parts' oder der erfindungsgemäßen vulkanisierten Kautschkzusammensetzung, wobei vorzugsweise im Fall von Reifenkomponenten diese ausgewählt sind aus Basis-Komponenten (base), d.h. Komponenten unterhalb der Lauffläche, Schulterstreifen (wing), Gürtelabdeckbändern (cap-ply), Gürteln (belt), Wulstkernen (bead) und/oder Wulstverstärkungen.

Alle im Zusammenhang mit der erfindungsgemäßen vulkanisierbaren Kautschkzusammensetzung, dem erfindungsgemäßen Kit-of-parts, dem erfindungsgemäßen Verfahren und der erfindungsgemäßen vulkanisierten Kautschkzusammensetzung sowie der erfindungsmäßigen Verwendung hierin zuvor beschriebenen bevorzugten Ausführungsformen sind auch bevorzugte Ausführungsformen hinsichtlich der vorgenannten erfindungsgemäßen Reifen.

*Gummiartikel, insbesondere technischer Gummiartikel*

Ein weiterer Gegenstand der vorliegenden Erfindung ist ein Gummiartikel, insbesondere ein technischer Gummiartikel, vorzugsweise ausgewählt aus Antriebsriemen, Gurten, Formteilen wie Puffern, Lagern, insbesondere Hydrolagern, Transportbändern, Profilen, Dichtungen, Ringen und/oder Schläuchen, hergestellt unter Einsatz der erfindungsgemäßen vulkanisierbaren Kautschkzusammensetzung, des erfindungsgemäßen Kit-of-parts, oder der erfindungsgemäßen vulkanisierten Kautschkzusammensetzung.

Alle im Zusammenhang mit der erfindungsgemäßen vulkanisierbaren Kautschkzusammensetzung, dem erfindungsgemäßen Kit-of-parts, dem erfindungsgemäßen Verfahren und der erfindungsgemäßen vulkanisierten Kautschkzusammensetzung sowie der erfindungsmäßigen Verwendung hierin zuvor beschriebenen bevorzugten Ausführungsformen sind auch bevorzugte Ausführungsformen hinsichtlich der vorgenannten erfindungsgemäßen vorzugsweise technischen Gummiartikel.

**Bestimmungsmethoden**

**1.** Bestimmung des $^{14}$C-Gehalts

Die Bestimmung des $^{14}$C-Gehalts (Gehalt an biobasiertem Kohlenstoff) erfolgt mittels der Radiokarbonmethode gemäß DIN EN 16640:2017-08.

**2.** Bestimmung der Korngrößenverteilung

Die Korngrößenverteilung lässt sich mittels Laserbeugung des in Wasser dispergierten Materials (1 Gew.-% in Wasser) nach ISO 13320:2009 bestimmen, wobei der Messung eine Ultraschallbehandlung von 12000 Ws vorgeschaltet ist. Die Angabe des Volumenanteils erfolgt z.B. als d99 in μm (Durchmesser der Körner von 99% des Volumens der Probe liegt unter diesem Wert). Analog werden die Werte d90 und d25 (in μm) bestimmt.

**3.** Bestimmung des Kohlenstoffgehalts

Der Kohlenstoffgehalt wird durch Elementaranalyse gemäß DIN 51732:2014-7 bestimmt.

**4.** Bestimmung des Sauerstoffgehalts

Der Sauerstoffgehalt wird durch Hochtemperaturpyrolyse mit Hilfe des EuroEA3000 CHNS-O Analyzers der Firma EuroVector S.p.A. ermittelt. Dabei wird der CHNS-Gehalt mittels des vorgenannten Analysiergeräts ermittelt und der Sauerstoff im Anschluss als Differenz berechnet (100 - CHNS).

**5.** Bestimmung des Trockenstoffgehalts der eingesetzten organischen Füllstoffe

Der Trockenstoffgehalt der Probe wurde in Anlehnung an DIN 51718:2002-06 wie folgt bestimmt. Hierzu wurde die Feuchtewaage MA100 der Fa. Sartorius auf eine Trockentemperatur von 105 °C geheizt. Die trockene Probe, soweit nicht schon als Pulver vorliegend, wurde zu einem Pulver gemörsert bzw. gemahlen. Ca. 2 g der zu messenden Probe wurden auf einer passenden Aluminiumschale in der Feuchtewaage eingewogen und anschließend wurde die Messung gestartet. Sobald sich das Gewicht der Probe für 30 s nicht mehr als 1 mg änderte, galt dies Gewicht als konstant und die Messung wurde beendet. Der Trockenstoffgehalt entspricht dann dem angezeigten Gehalt der Probe in Gew.-%. Für jede Probe wurde mindestens eine Doppelbestimmung durchgeführt. Die gewichteten Mittelwerte wurden angegeben.

**6.** Bestimmung des pH-Werts der eingesetzten organischen Füllstoffe

Die Bestimmung des pH-Wertes erfolgte in Anlehnung an die Norm ASTM D 1512 wie folgt. Die trockene Probe wurde, soweit nicht schon als Pulver vorliegend, zu einem Pulver gemörsert bzw. gemahlen. Jeweils 5 g Probe und 50 g vollentionisiertes Wasser wurden in einem Becherglas eingewogen. Die Suspension wurde unter ständigem Rühren mittels eines Magnetrührers mit Heizfunktion und Rührfisch auf eine Temperatur von 60 °C erhitzt und die Temperatur für 30 min bei 60 °C gehalten. Anschließend wurde die Heizfunktion des Rührers deaktiviert, so dass der Ansatz unter Rühren abkühlen konnte. Nach dem Abkühlen wurde das verdunstete Wasser durch erneute Zugabe von vollentionisiertem Wasser aufgefüllt und erneut für 5 min gerührt. Mit einem geeichten Messgerät wurde der pH-Wert der Suspension ermittelt. Die Temperatur der Suspension sollte 23 °C ($\pm$ 0,5 °C) betragen. Für jede Probe wurde eine Doppelbestimmung durchgeführt und der gemittelte Wert angegeben.

**7.** Bestimmung des Aschegehalts der organischen Füllstoffe

Der wasserfreie Aschegehalt der Proben wurde gemäß der Norm DIN 51719 durch thermogravimetrische Analyse wie folgt bestimmt: Vor dem Einwiegen wurde die Probe gemahlen oder gemörsert. Vor der Aschebestimmung wird der TrockenstoffGehalt des eingewogenen Materials ermittelt. Das Probenmaterial wurde auf 0,1 mg genau in einem Tiegel eingewogen. Der Ofen wurde samt Probe mit einer Aufheizrate von 9 K/min auf eine Zieltemperatur von 815 °C aufgeheizt und anschließend für 2 h bei dieser Temperatur gehalten. Anschließend wurde der Ofen auf 300 °C abgekühlt, bevor die Proben entnommen wurden. Die Proben wurden im Exsikkator bis auf Umgebungstemperatur abgekühlt und erneut gewogen. Die verbliebene Asche wurde in Bezug zur Einwaage gesetzt und so der gewichtsprozentuale Gehalt an Asche bestimmt. Für jede Probe wurde eine Dreifachbestimmung durchgeführt und der gemittelte Wert angegeben.

**8.** Bestimmung der BET- und STSA-Oberfläche der organischen Füllstoffe

Die spezifische Oberfläche des zu untersuchenden Füllstoffs wurde gemäß der für Industrieruße (Carbon Black) vorgesehenen Norm ASTM D 6556 (2019-01-01) durch Stickstoffadsorption bestimmt. Nach dieser Norm wurde zudem die BET-Oberfläche (spezifische Gesamtoberfläche nach Brunauer, Emmett und Teller) sowie die externe Oberfläche (STSA-Oberfläche; Statistical Thickness Surface Area) wie folgt bestimmt.

Die zu analysierende Probe wurde vor der Messung auf einen TrockensubstanzGehalt $\geq$ 97,5 Gew.-% bei 105 °C getrocknet. Zudem wurde die Messzelle vor Einwiegen der Probe für mehrere Stunden im Trockenofen bei 105 °C getrocknet. Die Probe wurde anschließend unter Verwendung eines Trichters in die Messzelle eingefüllt. Bei Verunreinigung des oberen Messzellenschafts während des Befüllens wurde dieser mittels einer geeigneten Bürste oder einem Pfeifenreiniger gesäubert. Bei stark fliegendem (elektrostatischem) Material wurde zusätzlich zur Probe Glaswolle eingewogen. Die Glaswolle diente dazu, während des Ausheizvorganges eventuell auffliegendes Material, welches das Gerät verschmutzen könnte, zurückzuhalten.

Die zu analysierende Probe wurde bei 150 °C für 2 Stunden ausgeheizt, der $Al_2O_3$-Standard bei 350 °C für 1 Stunde. Für die Bestimmung wurde in Abhängigkeit vom Druckbereich folgende $N_2$-Dosierung verwendet:

p/p0 = 0 - 0,01: $N_2$-Dosierung: 5 ml/g
p/p0 = 0,01 - 0,5: $N_2$-Dosierung: 4 ml/g.

Zur Bestimmung der BET-Oberfläche wurde im Bereich von p/p0 = 0,05 - 0,3 mit mind. 6 Messpunkten extrapoliert. Zur Bestimmung der STSA wurde im Bereich der Schichtdicke des adsorbierten $N_2$ von t = 0,4 - 0,63 nm (entspricht p/p0 = 0,2 - 0,5) mit mind. 7 Messpunkten extrapoliert.

**9.** Bestimmung der Härte

Die Bestimmung der Shore-A-Härte von vulkanisierten Kautschukzusammensetzungen erfolgte mit dem digitalen Shore-Härteprüfer der Fa. Sauter GmbH gemäß ISO 48-4:2018-08 bei 23 °C. Um die in der Norm geforderte Dicke des Probekörpers von mindestens 6 mm zu erzielen, wurde der Probekörper aus nicht mehr als 3 Schichten zusammengesetzt. Hierfür wurden 3 Stäbe S2, die für die Durchführung der Zugprüfung nach ISO 37:2011 ausgestanzt wurden, übereinandergestapelt. An jedem Probenstapel wurden fünf Messungen an unterschiedlichen Punkten des Stapels durchgeführt. Die erhaltenen Ergebnisse stellen den Durchschnittswert dieser fünf Messungen dar. Zwischen Vulkanisation und Prüfung wurden die Proben für mindestens 16 h bei Raumtemperatur gelagert.

**10.** Bestimmung der Vernetzungsdichte/Reaktionskinetik

Die Vernetzungsdichte und die Reaktionskinetik der Kautschukzusammensetzungen wurden gemäß DIN 53529-3:1983-06 bei 160 °C, jedoch bei einer Auslenkung von 0,5 oder 3 ° ermittelt (gemäß dem jeweils im experimentellen Teil angegebenen Wert). Die Messzeit betrug 30 min. Hierbei wurden das minimale und maximale Drehmoment ($M_L$, $M_H$) bestimmt. Hieraus wurde die Differenz $\Delta$ ($M_H$-$M_L$) errechnet (maximales minus minimales Drehmoment). Des Weiteren wurden die Zeiträume bestimmt, in welchen das Drehmoment, ausgehend vom Zeitpunkt des minimalen Drehmoments $M_L$ 10 %, 50 % bzw. 90 % des maximalen Drehmoments $M_H$ erreicht. Die Zeiträume wurden als $T_{10}$, $T_{50}$ und $T_{90}$ bezeichnet.

**11.** Bestimmung des Zug-Dehnungsverhaltens

Das Zug-Dehnungsverhalten einschließlich Zugfestigkeit und Bruchdehnung wurde an vulkanisierten Kautschukzusammensetzungen gemäß ISO 37:2011 ermittelt.

**12.** Dynamisch mechanische Thermo-Analyse (DMTA), bzw. dynamisch mechanische Analyse (DMA)

Die DMTA/DMA dient zur Charakterisierung des viskoelastischen Verhaltens. Die Testung erfolgte nach der Norm DIN EN ISO 6721 1-12, wobei in diesem Fall 6721-7 angewandt wurde. Das viskoelastische Verhalten wurde mit Hilfe des Prüfgeräts MCR 501 der Firma Anton Paar analysiert. Dabei wurde eine vulkanisierte Kautschukzusammensetzung einer sinusförmigen oszillierenden Beanspruchung im Bereich der linear-elastischen Deformation ausgesetzt. Die Prüfung wurde bei folgenden Parametern durchgeführt: Deformation: 1%; Frequenz: 10 Hz; Belastungsart: Torsion; Heizrate: 2K/min.; Heizlauf: -70 °C bis +100 °C. Es wurden Amplitude und Phasenverschiebung der Deformation erfasst und das viskoelastische Verhalten konnte anhand des Schub- und Verlustmoduls sowie des mechanischen Verlustfaktors tan δ beschrieben werden.

Allgemein ist der komplexe Schubmodul (G*) definiert als:

$$G^* = G` + i^{\,x}\, G``$$

Mit

G': Speichermodul (Realteil; steht für den elastischen Anteil)
G": Verlustmodul (Imaginärteil; steht für den viskosen Anteil)
i: imaginäre Zahl

Der Verlustfaktor tan δ (tan delta) ist definiert als:

$$\tan δ = G``/G`$$

13. <u>Materialdichte des eingesetzten Füllstoffs</u>

Die Materialdichte des Füllstoffs wurde mittels Helium-Pyknometer nach ISO 21687 bestimmt.

**Beispiele und Vergleichsbeispiele**

Die nachfolgenden Beispiele und Vergleichsbeispiele dienen der Erläuterung der Erfindung, sind jedoch nicht einschränkend auszulegen.

1. <u>Herstellung von erfindungsgemäß eingesetzten organischen Füllstoffen</u>

**1.1** Als erster erfindungsgemäßer organischer Füllstoff wurde ein durch hydrothermale Behandlung erhältliches Lignin **L1** eingesetzt.

Das durch hydrothermale Behandlung erhältliche Lignin **L1** wurde analog dem in WO 2017/085278 A1 beschriebenen Verfahren zur Herstellung von durch hydrothermale Behandlung erhältlichen Ligninen hergestellt.

Hierfür wird eine ein Lignin enthaltende Flüssigkeit bereitgestellt. Zunächst werden Wasser und Lignin gemischt und eine ligninhaltige Flüssigkeit mit einem Gehalt an organischer Trockenmasse von 15 Gew.-% zubereitet. Das Lignin wird anschließend in der ligninhaltigen Flüssigkeit überwiegend gelöst. Hierzu wird der pH-Wert durch Zugabe von NaOH eingestellt. Die Herstellung der Lösung wird durch intensives Durchmischen bei 80 °C über 3 h unterstützt. Die Lignin enthaltende Flüssigkeit wird einer hydrothermalen Behandlung unterzogen und so ein Feststoff erhalten. Dabei wird die hergestellte Lösung mit 2 K/min auf die Reaktionstemperatur von 220 °C aufgeheizt, welche über eine Reaktionsdauer von 8 h gehalten wird. Anschließend erfolgt eine Abkühlung. Im Ergebnis wird eine wässrige Feststoff-Suspension erhalten. Durch Filtration und Wäsche wird der Feststoff weitgehend entwässert und gewaschen. Die anschließende Trocknung und thermische Behandlung erfolgt unter Stickstoff in einer Wirbelschicht, wobei für die Trocknung auf eine Temperatur von 50 °C mit 1,5 K/min aufgeheizt und 2,5 h gehalten wird und anschließend für die thermische Behandlung mit 1,5 K/min auf die Temperatur von 190 °C aufgeheizt, für eine Dauer von 15 min gehalten und wieder abgekühlt wird. Der getrocknete Feststoff wird auf einer Gegenstrahlmühle mit Stickstoff auf einen d99-Wert <10 μm deagglomeriert (bestimmt gemäß der vorstehend beschriebenen Bestimmungsmethode).

**1.2** Als zweiter erfindungsgemäßer organischer Füllstoff wurde ein durch hydrothermale Behandlung erhältliches Lignin **L2** eingesetzt, das analog zum unter Abschnitt **1.1** beschriebenen Verfahren hergestellt wurde und als organischer Füllstoff einsetzbar ist. In Abweichung des unter Punkt **1.1** beschriebenen Verfahrens erfolgte die hydrothermale Behandlung jedoch derart, dass die Lignin enthaltende hergestellte Lösung mit einem Gehalt an organischer Trockenmasse von 10 Gew.-% zubereitet wurde. Nach Zugabe von NaOH wurde die Lignin enthaltende Flüssigkeit einer hydrothermalen Behandlung unterzogen und dabei 1,5 K/min auf eine Reaktionstemperatur von 230 °C aufgeheizt, welche über eine Reaktionsdauer von 1 h gehalten wurde. Zudem wurde die Lignin enthaltende Flüssigkeit vor Durchführung der hydrothermalen Behandlung mittels Formaldehyd modifiziert. Schließlich erfolgte die abschließende Mahlung auf einer Dampfstrahlmühle.

**1.3** In Abweichung des unter Punkt **1.1** beschriebenen Verfahrens erfolgte die hydrothermale Behandlung jedoch derart, dass die Lignin enthaltende hergestellte Lösung mit einem Gehalt an organischer Trockenmasse von 9,7 Gew.-% zubereitet wurde. Nach Zugabe von NaOH wurde die Lignin enthaltende Flüssigkeit einer hydrothermalen Behandlung unterzogen und dabei mit 1,5 K/min auf eine Reaktionstemperatur von 240 °C aufgeheizt, welche über eine Reaktionsdauer von 2 h gehalten wurde. Zudem wurde die Lignin enthaltende Flüssigkeit vor Durchführung der hydrothermalen Behandlung mittels Formaldehyd modifiziert. Schließlich erfolgte die abschließende Mahlung auf einer Gegenstrahlmühle mit Stickstoff.

**1.4** Die durch hydrothermale Behandlung erhältlichen Lignine **L1, L2** und **L3** wurden wie in nachstehender Tabelle 1.1 angegeben mittels der vorstehend genannten Methoden charakterisiert.

Tabelle 1.1 - Eigenschaften der durch hydrothermale Behandlung erhältlichen Lignine **L1, L2** und **L3**

| Test | Einheit | Lignin L1 | Lignin L2 | Lignin L3 |
|---|---|---|---|---|
| STSA | m²/g | 51,6 | 46,2 | 72,0 |
| BET | m²/g | 55,5 | 51,7 | 77,2 |
| ¹⁴C-Gehalt | Bq/g C | 0,23 | n.d. | n.d. |
| Sauerstoffgehalt | Gew.-% | 20,7 | n.d. | n.d. |
| Kohlenstoffgehalt | Gew.-% | 72,7 | n.d. | n.d. |
| Aschegehalt | Gew.-% | 3,4 | 2,6 | 2,4 |
| pH-Wert | ./. | 9,0 | 8,4 | 7,5 |
| Trockenstoffgehalt | Gew.-% | 97,9 | 97,4 | 98,5 |
| Materialdichte | g/cm³ | 1,32 | n.d. | n.d. |
| d99 | µm | 5,51 | 6,15 | 7,14 |
| d90 | µm | 3,51 | 4,15 | 5,0 |
| d25 | µm | 0,80 | 0,73 | 1,35 |
| n.d. = nicht bestimmt | | | | |

**2.** Herstellung von vulkanisierbaren Kautschukzusammensetzungen

Vulkanisierbare Kautschukzusammensetzungen wurden mittels eines zweistufigen Verfahrens hergestellt.

In der ersten Stufe wurde zunächst eine Kautschukzusammensetzung als Grundmischung (Masterbatch) hergestellt, indem die Bestandteile der Kautschukzusammensetzung compoundiert wurden, welche die Kautschukkomponente K, die Füllstoffkomponente F und das Organosilan umfassten. In der zweiten Stufe erfolgte die Zumischung der Bestandteile des Vernetzungssystems (Vulkanisations-Systems VS).

Die vulkanisierbaren Kautschukzusammensetzungen mit dem erfindungsgemäß eingesetzten organischen Füllstoff **L1** sowie die zugehörigen Vergleichskautschukzusammensetzungen mit Industrieruß als alleinigem Füllstoff wurden wie folgt hergestellt:

*Stufe 1*

Als Kautschuk wurde der Naturkautschuk (NR) SMR 5 CV 60 vom Handelshaus, Firma Astlett Rubber verwendet. Bei Einsatz von Industrieruß als alleinigem Füllstoff (Vergleichskautschukzusammensetzung **VK1V1)** wird dieser zu 33,3 % nach 1:30 Minuten (zusammen mit den eingesetzten Additiven wie Zinkoxid, Stearinsäure und weiteren Additiven; vgl. nachstehende Tabelle 2.1) und zu weiteren 33,3 % nach 3:30 Minuten (zusammen mit 50 % des eingesetzten Prozessöls) zugegeben. Nach 5 Minuten werden die letzten 33,3 % des Industrierußes mit den weiteren 50 % des eingesetzten Prozessöls zugegeben. Bei Teilersatz von Industrieruß durch den erfindungsgemäß eingesetzten Füllstoff (Vergleichskautschukzusammensetzung **VK1V2** und erfindungsgemäße Kautschukzusammensetzung **VK1B1**) wird nach 1:30 Minuten 100 % des eingesetzten Industrierußes zusammen mit den eingesetzten Additiven zugegeben. Nach 3:30 Minuten wird der erfindungsgemäß eingesetzte Füllstoff zu 50 % (zusammen mit 50 % des eingesetzten Prozessöls) und zu weiteren 50 % nach 5 Minuten (zusammen mit den weiteren 50 % des eingesetzten Prozessöls und im Falle der erfindungsgemäßen Beispiele **VK1B1** noch zusammen mit 100 % des Schwefel-funktionellen Organosilans) zugegeben.

Bei allen Zusammensetzungen wurden die Mischungsbestandteile dispersiv und distributiv so lange gemischt, bis der Mischprozess nach 10 min (nur im Fall von **V1B1** erst nach 13 min) gestoppt und die Kautschukzusammensetzung aus dem Labormischer entnommen worden ist. Die Kautschukzusammensetzung erreichte unter diesen Mischbedingungen eine finale Temperatur von 130 °C bis 155 °C. Nach erfolgter Herstellung der Kautschukzusammensetzung wurde diese vor Durchführung der zweiten Stufe abgekühlt (Relaxation/Lagerung).

Mittels der vorstehend beschriebenen Stufe 1 wurde eine erfindungsgemäß eingesetzte Kautschukzusammensetzung erhalten, die einen Naturkautschuk (**K1B1**) als Kautschukkomponente K und durch hydrothermale Behandlung erhältliches Lignin **L1** als organischen Füllstoff der Füllstoffkomponente enthielt. Des Weiteren enthielt die erfindungsgemäße Kautschukzusammensetzung **K1B1** Bis(triethoxysilylpropyl)disulfid (TESPD) als Schwefel-funktionelles Organosilan.

Zudem wurden die Vergleichszusammensetzungen **K1V1** und **K1V2** erhalten, die ebenfalls einen Naturkautschuk als Kautschukkomponente K enthielten. Die Vergleichszusammensetzung **K1V1** enthielt kein Lignin **L1,** sondern ausschließlich kommerziell erhältlichen Ruß als organischen Füllstoff der Füllstoffkomponente und kein Schwefel-funktionelles Organosilan, während die Vergleichszusammensetzung **K1V2** das Lignin **L1,** allerdings kein Schwefel-funktionelles Organosilan enthielt.

Die genauen Zusammensetzungen der vulkanisierbaren Kautschukzusammensetzungen sind nachstehender Tabelle 2.1 zu entnehmen. Die Mengen sind jeweils in phr (parts per hundred parts of rubber by weight) angegeben.

*Stufe 2*

In der zweiten Stufe wurden in die Kautschukzusammensetzung der ersten Stufe Schwefel als Vernetzer und ein **(K1V1, K1V2)** oder mehrere **(K1B1)** Beschleuniger eingearbeitet, wodurch eine vulkanisierbare Kautschukzusammensetzung erhalten worden ist. Ein Schwefel-Vernetzer und ein oder mehrere als Co-Agens eingesetzte Schwefel-Beschleuniger Systeme wurden im Labormischer zugegeben und bei einer Drehzahl von 50 Upm für 5 Minuten zusammen mit der Kautschukzusammensetzung aus der ersten Stufe gemischt. Die Endtemperatur betrug dabei 90 °C bis 100 °C. Nach erfolgter Zumischung des Vernetzungs-Systems wurde die resultierende Zusammensetzung abgekühlt.

Mittels der vorstehend beschriebenen Stufe 2 wurden nach Zugabe des Vulkanisations-Systems VS aus Vernetzer und Beschleuniger eine erfindungsgemäße vulkanisierbare Kautschukzusammensetzunge erhalten (**VK1B1**), die nach Beenden der Durchführung von Stufe 2 vulkanisiert werden kann. Zudem wurden auf diese Weise zwei vulkanisierbare Vergleichskautschukzusammensetzungen erhalten (**VK1V1** und **VK1V2),** die ebenfalls nach Beenden der Durchführung von Stufe 2 vulkanisiert werden können. Die genauen Zusammensetzungen der vulkanisierbaren Kautschukzusammensetzungen sind nachstehender Tabelle 2.1 zu entnehmen.

Tabelle 2.1 - Vulkanisierbare erfindungsgemäße Kautschukzusammensetzung **VK1B1** und Vergleichsbeispiele **VK1V1** und **VK1V2**

| *Bestandteile* | *VK1V1* | *VK1V2* | *VK1B1* |
|---|---|---|---|
| Naturkautschuk | 100 | 100 | 100 |
| Industrieruß | 55 | 30 | 30 |
| Organischer Füllstoff **L1** | - | 21 | 21 |
| Prozessöl | 2 | 2 | 2 |
| Zinkoxid | 3 | 3 | 3 |
| Organosilan | - | - | 0,65 |
| Stearinsäure | 2 | 2 | 2 |
| Alterungsschutzmittel | 1,5 | 1,5 | 1,5 |
| Lichtschutzwachs | 1 | 1 | 1 |
| | | | |
| Vernetzer | 1,5 | 1,5 | 1,57 |
| Beschleuniger B1 | 1,5 | 1,5 | 1,5 |
| Beschleuniger B2 | - | - | 0,3 |
| Beschleuniger B3 | - | - | 0,4 |

Als Industrieruß wurde das kommerziell erhältliche Produkt Carbon black N550 der Firma Pentacarbon (Distributor für Carbon Black) eingesetzt. Der organische Füllstoff **L1** ist bereits vorstehend beschrieben worden. Als Schwefel-funktionelles Organosilan wurde Bis(triethoxysilylpropyl)disulfid (TESPD, Si 266) der Firma Evonik verwendet. Naphthenischer Weichmacher der Firma Hansen & Rosenthal wurde als Prozessöl verwendet. Als Alterungsschutzmittel wurde N-Isopropyl-N'-phenyl-p-phenylendiamin (IPPD) der Firma Lehmann & Voss & Co. mit Handelsnamen Luvomax IPPD und als Lichtschutzwachs wurde Negozone 3457 F der Firma Hansen & Rosenthal verwendet. Als Vernetzer (Schwefel) wurde Struktol SU95 der Firma Schill + Seilacher verwendet. Als Beschleuniger wurden die Produkte TBBS-80 (B1), TBzTD-70 (B2) und DPG-80 (B3) der Firma Rhein Chemie verwendet. Als Zinkoxid wurde das Produkt Weißsiegel der Firma Brüggemann verwendet. Als Stearinsäure wurde das Produkt Palmera B 1805 der Firma Avokal-Heller verwendet.

Die vulkanisierbaren Kautschukzusammensetzungen mit den erfindungsgemäß eingesetzten organischen Füllstoffen L2 und L3 sowie die zugehörigen Vergleichskautschukzusammensetzungen mit Industrieruß als alleinigem Füllstoff wurden wie folgt hergestellt:

*Stufe 1*

Als Kautschuk wurde der Naturkautschuk (NR) SMR 5 CV 60 vom Handelshaus Firma Astlett Rubber verwendet. Bei Einsatz von Industrieruß als alleinigem Füllstoff (Vergleichskautschukzusammensetzungen **VK2V1** und **VK2V2**) wird dieser zu 33,3 % nach 2:00 Minuten (zusammen mit den eingesetzten Additiven wie Zinkoxid, Stearinsäure und weiteren Additiven; vgl. nachstehende Tabelle 2.2) und zu weiteren 33,3 % nach 3:00 Minuten (zusammen mit 50 % des eingesetzten Prozessöls) zugegeben. Nach 5 Minuten werden die letzten 33,3 % des Industrierußes mit den weiteren 50 % des eingesetzten Prozessöls zugegeben. Bei Teilersatz von Industrieruß durch einen der erfindungsgemäß eingesetzten Füllstoffe (erfindungsgemäße Kautschukzusammensetzungen **VK2B1** und **VK2B2)** wird nach 2:00 Minuten 50 % des eingesetzten Industrierußes zusammen mit den eingesetzten Additiven und nach 3:00 Minuten die letzten 50% des Industrierußes zusammen mit 50% des eingesetzten Prozessöls zugegeben. Nach 5:00 Minuten werden 100% des erfindungsgemäß eingesetzten Füllstoffs zusammen mit 50 % des eingesetzten Prozessöls und 100 % des Schwefel-funktionellen Organosilans zugegeben. Bei Einsatz des erfindungsgemäß eingesetzten Füllstoffs als alleinigem Füllstoff (erfindungsgemäße Kautschukzusammensetzungen **VK2B3, VK2B4** und **VK2B5)** wird dieser zu 33,3 % nach 2:00 Minuten (zusammen mit den eingesetzten Additiven) und zu weiteren 33,3 % nach 3:00 Minuten (zusammen mit 50 % des eingesetzten Prozessöls) zugegeben. Nach 5 Minuten werden die letzten 33,3 % des erfindungsgemäß eingesetzten Füllstoffs mit den weiteren 50 % des eingesetzten Prozessöls sowie 100% des erfindungsgemäß eingesetzten Organosilans zugegeben.

Bei allen Zusammensetzungen wurden die Mischungsbestandteile dispersiv und distributiv so lange gemischt, bis der Mischprozess nach 16 min gestoppt und die Kautschukzusammensetzung aus dem Labormischer entnommen worden ist. Die Kautschukzusammensetzung erreichte unter diesen Mischbedingungen eine finale Temperatur von 145 °C bis 155 °C. Nach erfolgter Herstellung der Kautschukzusammensetzung wurde diese vor Durchführung der zweiten Stufe abgekühlt (Relaxation/Lagerung).

Mittels der vorstehend beschriebenen Stufe 1 wurden fünf erfindungsgemäße Kautschukzusammensetzungen erhalten, die einen Naturkautschuk als Kautschukkomponente K und durch hydrothermale Behandlung erhältliches Lignin L2 (**K2B1** und **K2B3**) oder Lignin **L3 (K2B2, K2B4** oder **K2B5**) als organischen Füllstoff der Füllstoffkomponente enthielten. Des Weiteren enthielten die erfindungsgemäßen Kautschukzusammensetzungen **K2B1, K2B2, K2B3, K2B4** und **K2B5** Bis(triethoxysilylpropyl)disulfid (TESPD) als Schwefel-funktionelles Organosilan.

Zudem wurden die Vergleichszusammensetzungen **K2V1** und **K2V2** erhalten, die ebenfalls einen Naturkautschuk als Kautschukkomponente K, aber kein Lignin **L2** oder **L3**, sondern ausschließlich kommerziell erhältlichen Ruß als organischen Füllstoff der Füllstoffkomponente und kein Schwefel-funktionelles Organosilan enthielten.

Die genauen Zusammensetzungen der vulkanisierbaren Kautschukzusammensetzungen sind nachstehender Tabelle 2.2 zu entnehmen. Die Mengen sind jeweils in phr (parts per hundred parts of rubber by weight) angegeben.

*Stufe 2*

In der zweiten Stufe wurden in die Kautschukzusammensetzung der ersten Stufe Schwefel als Vernetzer und ein **(K2V1)** oder zwei **(K2V2, K2B1, K2B2, K2B3, K2B4** und **K2B5)** Beschleuniger eingearbeitet, wodurch jeweils eine vulkanisierbare Kautschukzusammensetzung erhalten worden ist. Ein Schwefel-Vernetzer und ein oder zwei als Co-Agens eingesetzte Schwefel-Beschleuniger Systeme wurden im Labormischer zugegeben und bei einer Drehzahl von 50 Upm für 5 Minuten zusammen mit der Kautschukzusammensetzung aus der ersten Stufe gemischt. Die Endtemperatur betrug dabei 90 °C bis 100 °C. Nach erfolgter Zumischung des Vernetzungs-Systems wurde die resultierende Zusammensetzung abgekühlt.

Mittels der vorstehend beschriebenen Stufe 2 wurden nach Zugabe des Vulkanisations-Systems VS aus Vernetzer und Beschleuniger fünf erfindungsgemäße vulkanisierbare Kautschukzusammensetzungen erhalten **(VK2B1, VK2B2, VK2B3, VK2B4** und **VK2B5),** die nach Beenden der Durchführung von Stufe 2 vulkanisiert werden können. Zudem wurden auf diese Weise zwei vulkanisierbare Vergleichskautschukzusammensetzungen erhalten **(VK2V1** und **VK2V2),** die ebenfalls nach Beenden der Durchführung von Stufe 2 vulkanisiert werden können. Die genauen Zusammensetzungen der vulkanisierbaren Kautschukzusammensetzungen sind nachstehender Tabelle 2.2 zu entnehmen.

Tabelle 2.2 - Vulkanisierbare erfindungsgemäße Kautschukzusammensetzungen **VK2B1, VK2B2, VK2B3, VK2B4** und **VK2B5** sowie Vergleichsbeispiele **VK2V1** und **VK2V2**

| Bestandteile | VK2V1 | VK2V2 | VK2B1 | VK2B2 | VK2B3 | VK2B4 | VK2B5 |
|---|---|---|---|---|---|---|---|
| Naturkautschuk | 100 | 100 | 100 | 100 | 100 | 100 | 100 |
| Industrieruß | 50 | 50 | 30 | 30 | - | - | - |
| Organischer Füllstoff **L2** | - | - | 20 | - | 50 | - | - |
| Organischer Füllstoff **L3** | - | - | - | 20 | - | 50 | 50 |
| Prozessöl | 2 | 2 | 2 | 2 | 2 | 2 | 2 |
| Zinkoxid | 5 | 5 | 5 | 5 | 5 | 5 | 5 |
| Organosilan | - | - | 0,7 | 1,1 | 1,72 | 2,75 | 2,75 |
| Stearinsäure | 2 | 2 | 2 | 2 | 2 | 2 | 2 |
| Alterungsschutzmittel | 1,5 | 1,5 | 1,5 | 1,5 | 1,5 | 1,5 | 1,5 |
| Lichtschutzwachs | 1 | 1 | 1 | 1 | 1 | 1 | 1 |
|  |  |  |  |  |  |  |  |
| Vernetzer | 1,5 | 1,7 | 1,77 | 1,8 | 1,88 | 2,0 | 2,3 |
| Beschleuniger B1 | 1,5 | 1,5 | 1,5 | 1,5 | 1,5 | 1,5 | 1,5 |
| Beschleuniger B3 | - | 0,6 | 0,6 | 0,6 | 1,0 | 1,0 | 1,0 |

Als in der Tabelle 2.2 gekennzeichnete Bestandteile Naturkautschuk, Industrieruß, Prozessöl, Organosilan, Zinkoxid, Stearinsäure, Vernetzer, Lichtschutzwachs, Alterungsschutzmittel sowie Beschleuniger B1 und B2 wurden diejenigen Produkte eingesetzt, die bereits im Zusammenhang mit Tabelle 2.1 beschrieben worden sind. Die organischen Füllstoffe **L2** und **L3** sind bereits vorstehend beschrieben worden.

**3.** Untersuchungen und Prüfungen der vulkanisierbaren und daraus erhältlichen vulkanisierten Kautschukzusammensetzungen

*3.1 Vernetzungsdichte und Reaktionskinetik*

Die nach der zweiten Stufe erhaltenen Kautschukzusammensetzungen wurden hinsichtlich ihrer Rohmischungseigenschaften geprüft. Dabei wurden gemäß der vorstehend beschriebenen Methoden Reaktionskinetik und Vernetzungsdichte gemessen.

In Tabelle 3.1 sind die erhaltenen Ergebnisse in Bezug auf minimales und maximales Drehmoment ($M_L$, $M_H$), Differenz $\Delta$ ($M_H$-$M_L$) und die Zeiträume $T_{10}$, $T_{50}$ und $T_{90}$ für die Vergleichsbeispiele **VK1V1** und **VK1V2** sowie für die erfindungsgemäß vulkanisierte Kautschukzusammensetzung **VK1B1** zusammengefasst. Die Werte wurden bei einer Auslenkung von 3 °C ermittelt.

Tabelle 3.1

| Parameter | VK1V1 | VK1V2 | VK1B1 |
|---|---|---|---|
| $T_{10}$ [min] | 1,51 | 1,29 | 1,29 |
| $T_{50}$ [min] | 2,13 | 1,92 | 1,61 |
| $T_{90}$ [min] | 3,34 | 3,67 | 2,41 |
| $M_L$ [dNm] | 4,07 | 5,16 | 4,80 |
| $M_H$ [dNm] | 43,47 | 32,97 | 37,62 |
| $\Delta$ ($M_H$-$M_L$) [dNm] | 39,40 | 27,81 | 32,82 |

Die erfindungsgemäße Kautschukzusammensetzung **VK1B1** zeigt eine ähnliche Reaktionskinetik ($T_{10}$, $T_{50}$, $T_{90}$) wie die Vergleichsbeispiele **VK1V1** und **VK1V2.** Geringe Abweichungen ergeben sich in der Vernetzungsdichte, die die Differenz $\Delta$ ($M_H$-$M_L$) aus dem maximalen und minimalen Drehmoment in dNm darstellt.

In Tabelle 3.2 sind die erhaltenen Ergebnisse in Bezug auf minimales und maximales Drehmoment ($M_L$, $M_H$), Differenz $\Delta$ ($M_H$-$M_L$) und die Zeiträume $T_{10}$, $T_{50}$ und $T_{90}$ für die Vergleichsbeispiele **VK2V1** und **VK2V2** sowie für die erfindungsgemäß vulkanisierten Kautschukzusammensetzungen **VK2B1, VK2B2, VK2B3, VK2B4** und **VK2B5** zusammengefasst. Die Werte wurden bei einer Auslenkung von 0,5 °C ermittelt.

Tabelle 3.2

| Parameter | VK2V1 | VK2V2 | VK2B1 | VK2B2 | VK2B3 | VK2B4 | VK2B5 |
|---|---|---|---|---|---|---|---|
| $T_{10}$ [min] | 2,13 | 1,47 | 2,02 | 2,11 | 3,71 | 2,81 | 2,8 |
| $T_{50}$ [min] | 2,98 | 2,03 | 2,8 | 2,94 | 4,69 | 4,18 | 4,11 |
| $T_{90}$ [min] | 4,75 | 3,32 | 4,63 | 5,02 | 7,03 | 8,23 | 7,83 |
| $M_L$ [dNm] | 0,99 | 1,12 | 1,45 | 2,23 | 1,93 | 3,97 | 3,75 |
| $M_H$ [dNm] | 13,9 | 16,86 | 15,52 | 14,78 | 12,43 | 12,86 | 13,55 |
| $\Delta$ ($M_H$-$M_L$) [dNm] | 12,91 | 15,74 | 14,07 | 12,55 | 10,5 | 8,89 | 9,8 |

Die erfindungsgemäßen Kautschukzusammensetzungen **VK2B1** und **VK2B2,** gekennzeichnet durch Teilersatz von Ruß durch Lignin-basierten Füllstoff **L2** oder **L3,** zeigen eine ähnliche oder verbesserte Reaktionskinetik ($T_{10}$, $T_{50}$, $T_{90}$) wie die Vergleichsbeispiele **VK2V1** und **VK2V2.** Die erfindungsgemäßen Kautschukzusammensetzungen **VK2B3, VK2B4** und **VK2B5,** gekennzeichnet durch vollständigen Ersatz von Ruß durch Lignin-basierten Füllstoff **L2** oder **L3,** zeigen eine vergrößerte Inkubationszeit (verbesserte Scorch-Zeit), was zu einem längeren $T_{90}$-Wert führt als im Fall der Vergleichsbeispiele **VK2V1** und **VK2V2.**

*3.2 Zugfestigkeit, Bruchdehnung und Shore A-Härte*

Die erhaltenen Kautschukzusammensetzungen **K1V1, K1V2** und **K1B1** wurden alle bei 160 °C vulkanisiert, wobei die Vulkanisationszeiten den Daten der Reaktionskinetik der jeweiligen Mischung angepasst wurde. Die Vulkanisationszeit betrug bei Mischung **VK1V1** 6 min, bei Mischung **VK1V2** 7 min, bei Mischung **VK1B1** 5 min. Anschließend wurden Zugfestigkeit, Bruchdehnung, und Shore A-Härte gemäß den vorstehend beschriebenen Methoden ermittelt.

In Tabelle 3.3 sind die erhaltenen Ergebnisse für die Vergleichsbeispiele **VK1V1** und **VK1V2** sowie für die erfindungsgemäß vulkanisierte Kautschukzusammensetzung **VK1B1** zusammengefasst.

Tabelle 3.3

| Parameter | VK1V1 | VK1V2 | VK1B1 |
|---|---|---|---|
| Zugfestigkeit [MPa] | 25,99 | 22,29 | 24,09 |
| Bruchdehnung [%] | 480 | 544 | 539 |
| Shore A | 66 | 62 | 64 |

Die erfindungsgemäße Kautschukzusammensetzung **VK1B1** hat eine ähnliche Zugfestigkeit wie die Vergleichskautschukzusammensetzungen **VK1V1** und **VK1V2.** Durch den Teilersatz des Industrierußes durch den organische Füllstoff **L1** und der Zugabe des Schwefel-funktionellen Organosilan wurde eine gleiche Härte (Shore A) und eine gleiche Bruchdehnung erreicht.

Die erhaltenen Kautschukzusammensetzungen **K2V1, K2V2** sowie **K2B1, K2B2, K2B3, K2B4** und **K2B5** wurden alle bei 160 °C vulkanisiert, wobei die Vulkanisationszeiten den Daten der Reaktionskinetik der jeweiligen Mischung angepasst wurde. Die Vulkanisationszeit betrug bei Mischung **VK2V1** 7 min, bei Mischung **VK2V2** 6 min, bei Mischung **VK2B1** 7 min, bei Mischung **VK2B2** 7 min, bei Mischung **VK2B3** 9 min, bei Mischung **VK2B4** 11 min und bei Mischung **VK2B5** 10 min. Anschließend wurden Zugfestigkeit, Bruchdehnung, und Shore A-Härte gemäß den vorstehend beschriebenen Methoden ermittelt.

In Tabelle 3.4 sind die erhaltenen Ergebnisse für die Vergleichsbeispiele **VK2V1** und **VK2V2** sowie für die erfindungsgemäß vulkanisierten Kautschukzusammensetzungen **VK2B1, VK2B2, VK2B3, VK2B4** und **VK2B5** zusammengefasst.

Tabelle 3.4

| Parameter | VK2V1 | VK2V2 | VK2B1 | VK2B2 | VK2B3 | VK2B4 | VK2B5 |
|---|---|---|---|---|---|---|---|
| Zugfestigkeit [MPa] | 25,2 | 27,4 | 24,8 | 23,1 | 19,9 | 14,3 | 14,0 |
| Bruchdehnung [%] | 486 | 501 | 515 | 507 | 520 | 429 | 410 |
| Shore A | 60 | 63 | 63 | 63 | 60 | 67 | 67 |

Die erfindungsgemäßen Kautschukzusammensetzungen **VK2B1, VK2B2, VK2B3, VK2B4** und **VK2B5** zeigen im Vergleich zu den Vergleichskautschukzusammensetzungen **VK1V1** und **VK1V2** eine ähnliche oder abnehmende Zugfestigkeit bei teilweisem oder vollständigem Ersatz von Ruß durch Lignin-basierte Füllstoffe **L2** oder **L3,** wobei die Härte (Shore A) unverändert bleibt oder zunimmt.

*3.3 Dynamisch mechanische Thermo-Analyse (DMTA)*

Die vulkanisierten Kautschukzusammensetzung wurden mittels einer dynamisch mechanischen Thermo-Analyse (DMTA) gemäß der vorstehend beschriebenen Methode untersucht, um ihr viskoelastisches Verhalten zu charakterisieren. In Tabelle 3.5 sind die erhaltenen Ergebnisse für die Vergleichsbeispiele **VK1V1** und **VK1V2** sowie für die erfindungsgemäß vulkanisierte Kautschukzusammensetzung **VK1B1** zusammengefasst.

Tabelle 3.5

| Parameter | VK1V1 | VK1V2 | VK1B1 |
|---|---|---|---|
| Speichermodul G' bei 60°C [MPa] | 3,11 | 3,16 | 3,55 |
| Komplexer Schubmodul G* bei 60°C [MPa] | 3,15 | 3,20 | 3,58 |
| Verlustfaktor tan delta bei 60 °C | 0,169 | 0,153 | 0,133 |

Für eine vulkanisierte Kautschukzusammensetzung ist grundsätzlich eine möglichst hohe dynamische Steifigkeit und ein möglichst niedriger tan delta Wert erstrebenswert. Eine Kennzahl für die dynamische Steifigkeit ist dabei der komplexe Schubmodul G*.

Die erfindungsgemäße vulkanisierte Kautschukzusammensetzung **VK1B1** weist eine erhöhte Steifigkeit gegenüber den Vergleichsbeispielen **VK1V1** und **VK1V2** auf. Üblicherweise führt eine hohe dynamische Steifigkeit G* (60 °C) zu einem erhöhten Verlustfaktor tan delta. Allerdings werden eine geringe Wärmebildung und somit niedrige tan delta Werte bevorzugt. Überraschenderweise konnte durch den teilweisen Ersatz von Industrieruß durch den organischen Füllstoff **L1** in Kombination mit der Zugabe des Schwefel-funktionellen Organosilans ein gegenläufiger Effekt beobachtet werden, da bei einer erhöhten Steifigkeit G* (60 °C) gleichzeitig eine Reduzierung des Verlustfaktors auftrat (vgl. **VK1B1** vs. **VK1V1** und **VK1V2).**

Folglich kann durch die Verwendung des organischen Füllstoffs **L1** in Kombination mit dem Organosilan die Wärmebildung reduziert und gleichzeitig die dynamische Steifigkeit erhöht werden. Darüber hinaus konnte eine gleiche Härte erreicht werden.

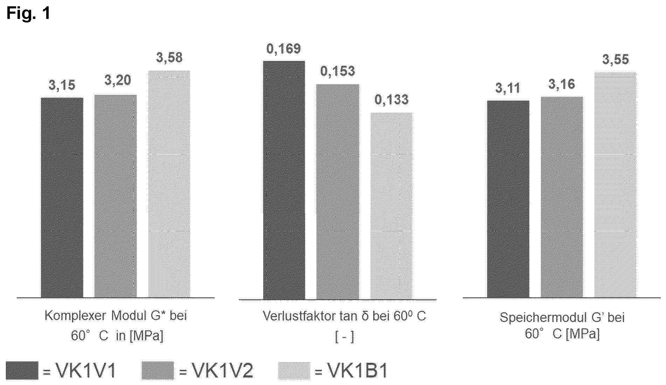

Die aus Tabelle 3.5 ersichtlichen Ergebnisse hinsichtlich des Verlustfaktors tan delta sind in **Fig. 1** graphisch veranschaulicht. **Fig. 1** zeigt die Reduzierung des Verlustfaktors durch den Teilersatz des Industrieruß durch den organischen Füllstoff **L1** und der Zugabe des Schwefel-funktionellen Organosilans.

In Tabelle 3.6 sind die erhaltenen Ergebnisse für die Vergleichsbeispiele **VK2V1** und **VK2V2** sowie für die erfindungsgemäß vulkanisierten Kautschukzusammensetzungen **VK2B1, VK2B2, VK2B3, VK2B4** und **VK2B5** zusammengefasst.

Tabelle 3.6

| Parameter | VK2V1 | VK2V2 | VK2B1 | VK2B2 | VK2B3 | VK2B4 | VK2B5 |
|---|---|---|---|---|---|---|---|
| Speichermodul G' bei 60°C [MPa] | 2,1 | 2,43 | 2,85 | 3,18 | 2,94 | 4,73 | 4,89 |
| Komplexer Schubmodul G* bei 60°C [MPa] | 2,14 | 2,47 | 2,88 | 3,22 | 2,97 | 4,78 | 4,93 |
| Verlustfaktor tan delta bei 60 °C | 0,18 | 0,17 | 0,14 | 0,14 | 0,14 | 0,14 | 0,12 |

Die durch den komplexen Schubmodul G* beschriebene dynamische Steifigkeit der erfindungsgemäßen vulkanisierten Kautschukzusammensetzungen **VK2B1, VK2B2, VK2B3, VK2B4** und **VK2B5** liegt überraschenderweise deutlich höher als im Fall der Vergleichsbeispiele **VK2V1** und **VK2V2** mit Industrieruß als alleinigem Füllstoff. Gleichzeitig zeigen die erfindungsgemäß vulkanisierten Kautschukzusammensetzungen **VK2B1, VK2B2, VK2B3, VK2B4** und **VK2B5** überraschenderweise deutlich geringere Verlustfaktoren tan delta als im Fall der Vergleichsbeispiele **VK2V1** und **VK2V2** mit Industrieruß als alleinigem Füllstoff. Dabei zeigen die Kautschukzusammensetzungen mit Lignin **L3** als alleinigem Füllstoff, **VK2B4** und **VK2B5,** im Vergleich zur Kautschukzusammensetzung **VK2B3** mit Lignin **L2** als alleinigem Füllstoff eine besonders ausgeprägte Verbesserung dieser Parameter gegenüber den Kautschukzusammensetzungen **VK2V1** und **VK2V2** mit Ruß als alleinigem Füllstoff. Die hohe dynamische Steifigkeit in Kombination mit dem niedrigen Verlustfaktor als Indikator für die Hysterese, der Umwandlung von mechanischer Energie in Wärme, ist einzigartig für diese Lignin-basierten Füllstoffe. Diese Reduzierung der Wärmebildung senkt den Rollwiderstand des Reifens mit positiven Auswirkungen auf den Spritverbrauch und $CO_2$-Ausstoß des Fahrzeugs. Durch die im Vergleich zu Industrieruß enthaltenden Kautschukzusammensetzungen bessere Entkopplung dieser beiden gummitechnischen Kennwerte sind die hier offenbarten Lignin-basierten hervorragend geeignet für den Einsatz in Gummiartikeln, die unter dynamischer Verformung verwendet werden, z.B. bei der Verwendung in Reifenkarkassenmischungen zur Verbesserung des Rollwiderstands von Reifen oder in technischen Gummiartikeln.

**Patentansprüche**

1. Eine vulkanisierbare Kautschukzusammensetzung umfassend eine Kautschukkomponente K, eine Füllstoffkomponente F und ein Vulkanisations-System VS, wobei

   das Vulkanisations-System VS wenigstens Schwefel und/oder wenigstens einen Schwefelspender umfasst,
   die Kautschukkomponente K wenigstens einen Kautschuk enthält, welcher mittels Schwefel vernetzbar ist,
   die Füllstoffkomponente F wenigstens einen organischen Füllstoff enthält, welcher einen $^{14}$C-Gehalt in einem Bereich von 0,20 bis 0,45 Bq/g Kohlenstoff und eine BET-Oberfläche in einem Bereich von 20 bis 150 m$^2$/g aufweist und
   die vulkanisierbare Kautschukzusammensetzung zudem wenigstens ein Organosilan als Teil der Füllstoffkomponente F umfasst, wobei das wenigstens eine Organosilan wenigstens eine hydrolysierbare Gruppe und wenigstens ein Schwefel-Atom aufweist.

2. Die Kautschukzusammensetzung gemäß Anspruch 1, **dadurch gekennzeichnet, dass** der wenigstens eine mittels Schwefel vernetzbare Kautschuk der Kautschukkomponente K ein Dienkautschuk ausgewählt ist aus der Gruppe aus Naturkautschuk (NR; natural rubber), synthetischem Naturkautschuk, insbesondere Isoprenkautschuk (IR; isopren rubber), Styrol-Butadien-Kautschuk (SBR; styrene butadiene rubber), lösungspolymerisierter Styrol-Butadien-Kautschuk (SSBR), emulsionspolymerisiertem Styrol-Butadien-Kautschuk (ESBR), insbesondere funktionalisiertem SSBR, Butadien-Kautschuk (BR; butadien rubber), Chloropren-Kautschuk (CR), AcrylnitrilButadien-Kautschuk (NBR; nitrile rubber), Isobutylen-Isopren-Kautschuk (IIR; isobuten isoprene rubber), bromierter Isobutylen-Isopren-Kautschuk (BIIR), chlorierter Isobutylen-Isopren-Kautschuk (CIIR), sowie Mischungen daraus, vorzugsweise ausgewählt ist aus Naturkautschuk, Styrol-Butadien-Kautschuk oder lösungspolymerisiertem Styrol-Butadien-Kautschuk sowie Mischungen daraus.

3. Die Kautschukzusammensetzung gemäß Anspruch 1 oder 2, **dadurch gekennzeichnet, dass** der organische Füllstoff eine STSA-Oberfläche in einem Bereich von >18 bis <150 m$^2$/g, vorzugsweise von 20 bis 130 m$^2$/g, besonders bevorzugt von 25 bis 120 m$^2$/g, ganz besonders bevorzugt von 30 bis 110 m$^2$/g, insbesondere von 40 bis 100 m$^2$/g, am meisten bevorzugt von 40 bis <100 m$^2$/g, aufweist, und/oder eine BET Oberfläche in einem Bereich von >20 bis 150 m$^2$/g, vorzugsweise von 25 bis 120 m$^2$/g, besonders bevorzugt in einem Bereich von 30 bis 110 m$^2$/g, am meisten bevorzugt in einem Bereich von 40 bis 100 m$^2$/g aufweist und/oder einen d99-Wert von <25 $\mu$m, vorzugs-weise <20 $\mu$m, besonders bevorzugt <18 $\mu$m, ganz besonders bevorzugt <15 $\mu$m, noch bevorzugter <12 $\mu$m, noch bevorzugter <10 $\mu$m, noch bevorzugter <9 $\mu$m, noch bevorzugter <8 $\mu$m, aufweist, wobei der d99-Wert vorzugsweise jeweils bestimmt wird mittels Laserbeugung nach ISO 13320:2009.

4. Die Kautschukzusammensetzung gemäß einem oder mehreren der vorstehenden Ansprüche, **dadurch gekennzeichnet, dass** der organische Füllstoff einen Sauerstoffgehalt in einem Bereich von >8 Gew.-% bis <30 Gew.- %, vorzugsweise von >10 Gew.-% bis <30 Gew.-%, besonders bevorzugt von >15 Gew.-% bis <30 Gew.-%, am meisten bevorzugt von >20 Gew.-% bis <30 Gew.-%, und/oder einen Kohlenstoffgehalt in einem Bereich von >60 Gew.-% bis <90 Gew.-%, vorzugsweise von >60 Gew.-% bis <85 Gew.-%, besonders bevorzugt von >60 Gew.-% bis <82 Gew.-%, am meisten bevorzugt von >60 Gew.-% bis <80 Gew.-%, aufweist, jeweils bezogen auf den aschefreien und wasserfreien Füllstoff.

5. Die Kautschukzusammensetzung gemäß einem oder mehreren der vorstehenden Ansprüche, **dadurch gekennzeichnet, dass** sie den wenigstens einen organischen Füllstoff in einer Menge enthält, die in einem Bereich von 1 bis 150 phr, vorzugsweise von 5 bis 100 phr, besonders bevorzugt von 10 bis 80 phr, ganz besonders bevorzugter von 15 bis 70 phr, am meisten bevorzugt von 15 bis 60 phr, liegt.

6. Die Kautschukzusammensetzung gemäß einem oder mehreren der vorstehenden Ansprüche, **dadurch gekennzeichnet, dass** der organische Füllstoff ein ligninbasierter Füllstoff ist, wobei vorzugsweise zumindest das Lignin und noch bevorzugter der organische Füllstoff als solcher zumindest teilweise in einer mittels hydrothermalen Behandlung erhältlichen Form vorliegt, besonders bevorzugt mittels hydrothermaler Behandlung erhältlich ist, wobei die hydrothermale Behandlung vorzugsweise bei einer Temperatur in einem Bereich von >100°C bis <300°C, besonders bevorzugt von >150°C bis <250°C, durchgeführt worden ist.

7. Die Kautschukzusammensetzung gemäß einem oder mehreren der vorstehenden Ansprüche, **dadurch gekennzeichnet, dass** das wenigstens eine Organosilan eine Verbindung der allgemeinen Formel (I) und/oder (II) ist

$$Si(X)_{4-y}(R)_y \qquad (I),$$

$$(X)_{3-z}(T)_z Si\text{-}(RA)\text{-}Si(X)_{3-z}(T)_z \qquad (II)$$

wobei im Fall von der allgemeinen Formel (I)
X jeweils unabhängig voneinander für eine hydrolysierbare und gegenüber phenolischen OH-Gruppen, Phenolat-Gruppen, aliphatischen OH-Gruppen, Carbonsäure-Gruppen, Carboxylat-Gruppen und/oder Mischungen dieser Gruppen reaktive funktionelle Gruppe steht, die vorzugsweise jeweils unabhängig voneinander eine Alkoxygruppe darstellt, besonders bevorzugt ausgewählt ist aus $O\text{-}C_{1-4}$-Alkyl,
der Parameter y für eine ganze Zahl im Bereich von 1 bis 3 steht, jedoch mindestens 1 beträgt, vorzugsweise genau für 1 steht, und
R für einen nicht-hydrolysierbaren organischen Rest steht, vorzugsweise für einen $C_3$- bis $C_{20}$-aliphatischen Rest, der mindestens ein Schwefel-Atom aufweist, wobei das Schwefel-Atom vorzugsweise Teil mindestens einer funktionellen Gruppe ist, welche vorzugsweise ausgewählt ist aus der Gruppe bestehend aus Thiolgruppen, blockierten Thiolgruppen, Di- und/oder Polysulfid-Gruppen, sowie Mischungen davon, ganz besonders bevorzugt Thiolgruppen,
wobei im Fall der allgemeinen Formel (II)
X jeweils unabhängig voneinander für eine hydrolysierbare und gegenüber phenolischen OH-Gruppen, Phenolat-Gruppen, aliphatischen OH-Gruppen, Carbonsäure-Gruppen, Carboxylat-Gruppen und/oder Mischungen dieser Gruppen reaktive funktionelle Gruppe steht, die vorzugsweise unabhängig voneinander eine Alkoxygruppe darstellt, besonders bevorzugt ausgewählt ist aus $O\text{-}C_{1-4}$-Alkyl,
RA für einen zweibindigen nicht-hydrolysierbaren organischen Rest steht, vorzugsweise einen zweibindigen $C_6$- bis $C_{20}$-aliphatischen Rest darstellt, der mindestens ein Schwefel Atom, vorzugsweise mindestens eine Disulfid- und/oder Polysulfid-Gruppe, besonders bevorzugt eine Di- oder Tetrasulfid-Gruppe aufweist,
der Parameter z jeweils für eine ganze Zahl im Bereich von 0 bis 2 steht, vorzugsweise jeweils 0 oder 2 bedeutet, und
T für einen nicht-hydrolysierbaren organischen Rest steht, der von dem Rest RA verschieden ist und keine funktionellen Gruppen aufweist und vorzugsweise ein $C_1$- bis $C_{20}$-aliphatischer Rest ist.

8. Die Kautschukzusammensetzung gemäß einem oder mehreren der vorstehenden Ansprüche, **dadurch gekennzeichnet, dass** das wenigstens eine Organosilan

ein Monosilan der allgemeinen Formel (I) mit mindestens einer Mercaptoalkylgruppe R, wobei R vorzugsweise ein $C_3$ bis $C_8$-aliphatischer Rest, besonders bevorzugt ein $C_3$- bis $C_6$-aliphatischer Rest ist, und wenigstens einer Gruppe X ist, vorzugsweise zwei oder drei Gruppen X enthält, besonders bevorzugt ausgewählt ist aus der Gruppe bestehend aus 4-Mercaptobutyltrialkoxysilan und/oder 6-Mercaptohexyltrialkoxysilan und/oder 3-Mercaptopropyltrialkoxysilan, wobei Alkoxygruppen vorzugsweise unabhängig voneinander Methoxy- oder Ethoxygruppen bedeuten, und/oder
ein Bis(Silan) der allgemeinen Formel (II) ist, wobei der nicht hydrolysierbare organische Rest RA vorzugsweise ein $C_6$- bis $C_{20}$-aliphatischer Rest, besonders bevorzugt ein $C_6$- bis $C_{10}$-aliphatischer Rest ist und wenigstens ein Schwefel-Atom aufweist, vorzugsweise eine Di- oder Polysulfid-Gruppe, besonders bevorzugt eine Di- oder Tetrasulfid-Gruppe, und wenigstens eine Gruppe X, vorzugsweise zwei oder drei Gruppen X enthält, vorzugsweise ein Bis(Silan) der allgemeinen Formel (II) ist, besonders bevorzugt ausgewählt ist aus der Gruppe bestehend aus Bis(dimethylethoxysilylpropyl)tetrasulfid (DMESPT), Bis(dimethylethoxysilylpropyl)disulfid (DMESPD), Bis(triethoxysilylpropyl)tetrasulfid (TESPT), Bis(triethoxysilylpropyl)disulfid (TESPD) und Mischungen davon, ganz besonders bevorzugt TESPT und/oder TESPD ist, am meisten bevorzugt TESPD ist.

9. Die Kautschukzusammensetzung gemäß einem oder mehreren der vorstehenden Ansprüche, **dadurch gekennzeichnet, dass** das Organosilan in einer Menge enthalten ist, die in einem Bereich von 0,25 bis 7 phr, vorzugsweise 0,25 bis 5 phr, besonders bevorzugt 0,5 bis 3 phr, am meisten bevorzugt 0,5 bis 2 phr, liegt und/oder in einer Menge enthalten ist, die bezogen auf den organischen Füllstoff in einem Bereich von 1 bis 10 Gew.-%, vorzugsweise 2 bis 8 Gew.-%, besonders bevorzugt 2,5 bis 6 Gew.-%, am meisten bevorzugt 3 bis 6 Gew.-%, liegt.

10. Die Kautschukzusammensetzung gemäß einem oder mehreren der vorstehenden Ansprüche, **dadurch gekennzeichnet, dass** der Schwefel-Vernetzer in einer Menge enthalten ist, die in einem Bereich von 0,25 bis 10 phr, vorzugsweise 0,25 bis 7 phr, besonders bevorzugt 0,5 bis 5 phr, am meisten bevorzugt 1 bis 3 phr liegt.

11. Die Kautschukzusammensetzung gemäß einem oder mehreren der vorstehenden Ansprüche, **dadurch gekennzeichnet, dass** sie wenigstens einen Beschleuniger für die Schwefelvernetzung enthält, der vorzugsweise Teil des Vulkanisations-Systems VS der Kautschukzusammensetzung ist und welcher vorzugsweise ausgewählt ist aus der Gruppe bestehend aus Dithiocarbamaten, Xanthogenaten, Thiuramen wie Thiurammonosulfid und/oder Thiuramdisulfid und/oder Tetrabenzylthiuramdisulfid (TbzTD), Thiazolen wie 2-Mercaptobenzothiazol und/oder Dibenzothiazyldisulfid, Sulfenamiden wie N-Cyclohexyl-2-benzothiazyl-sulfenamid und/oder 2-Morpholinothiobenzothiazol und/oder N-tert.-Butyl-2-benzothiazyl-sulfenamid, Guanidinen wie N,N'-Diphenylguanidin, Thioharnstoffen, Dithiophosphaten, Dipentamethylenthiuramtetrasulfid, 4,4'-Dithiodimorpholin, Caprolactamdisulfid und Mischungen davon, besonders bevorzugt ausgewählt ist aus der Gruppe bestehend aus N-tert.-Butyl-2-benzothiazyl-sulfenamid, Tetrabenzylthiuramdisulfid und N,N'-Diphenylguanidin sowie Mischungen davon.

12. Ein Kit-of-parts umfassend in räumlich getrennter Form

als Teil (A) eine Kautschukzusammensetzung, die wenigstens die Kautschukkomponente K und wenigstens die Füllstoffkomponente F umfasst, jeweils wie in einem oder mehreren der vorstehenden Ansprüche definiert, wobei Teil (A) jedoch nicht Schwefel und/oder wenigstens einen Schwefelspender des Vulkanisations-Systems VS wie in einem oder mehreren der vorstehenden Ansprüche definiert umfasst, und
als Teil (B) ein Vulkanisations-System VS wie in einem oder mehreren der vorstehenden Ansprüche definiert umfassend wenigstens Schwefel und/oder wenigstens einen Schwefelspender,
wobei das Organosilan wie in einem oder mehreren der vorstehenden Ansprüche definiert in der Füllstoffkomponente F in Teil (A) enthalten ist.

13. Eine vulkanisierte Kautschukzusammensetzung, welche erhältlich ist durch Vulkanisation der vulkanisierbaren Kautschukzusammensetzung gemäß einem oder mehreren der Ansprüche 1 bis 11 oder durch Vulkanisation einer durch Zusammengeben und Vermischen der beiden Teile (A) und (B) des Kit-of-parts gemäß Anspruch 12 erhältlichen vulkanisierbaren Kautschukzusammensetzung.

14. Eine Verwendung der vulkanisierbaren Kautschukzusammensetzung gemäß einem oder mehreren der Ansprüche 1 bis 11, des Kit-of-parts gemäß Anspruch 12 oder der vulkanisierten Kautschukzusammensetzung gemäß Anspruch 13 zum Einsatz bei der Herstellung von Reifen, vorzugsweise bei der Herstellung von Luftreifen und Vollgummireifen, von Reifenkomponenten, vorzugsweise ausgewählt aus Basis-Komponenten (base), d.h. Komponenten unterhalb der Lauffläche, Schulterstreifen (wing), Gürtelabdeckbändern (cap-ply), Gürteln (belt), Wulstkernen (bead) und/oder Wulstverstärkungen und/oder zum Einsatz bei der Herstellung von vorzugsweise technischen Gummiartikeln, die vorzugsweise ausgewählt sind aus Antriebsriemen, Gurten, Formteilen wie Puffern, Lagern, insbesondere Hydrolagern, Transportbändern, Profilen, Dichtungen, Ringen und/oder Schläuche.

15. Ein Reifen, vorzugsweise ein Luftreifen oder Vollgummireifen, eine Reifenkomponente oder ein vorzugsweise technischer Gummiartikel, jeweils hergestellt unter Einsatz der vulkanisierbaren Kautschukzusammensetzung gemäß einem oder mehreren der Ansprüche 1 bis 11, des Kit-of-parts gemäß Anspruch 12 oder der vulkanisierten Kautschukzusammensetzung gemäß Anspruch 13, wobei vorzugsweise im Fall von Reifenkomponenten diese ausgewählt sind aus Basis-Komponenten (base), d.h. Komponenten unterhalb der Lauffläche, Schulterstreifen (wing), Gürtelabdeckbändern (cap-ply), Gürteln (belt), Wulstkernen (bead) und/oder Wulstverstärkungen und wobei vorzugsweise im Fall von Gummiartikeln wie vorzugsweise technischen Gummiartikeln diese ausgewählt sind aus Antriebsriemen, Gurten, Formteilen wie Puffern, Lagern, insbesondere Hydrolagern, Transportbändern, Profilen, Dichtungen, Ringen und/oder Schläuchen.

**Fig. 1**

**IN DER BESCHREIBUNG AUFGEFÜHRTE DOKUMENTE**

**In der Beschreibung aufgeführte Patentdokumente**

- DE 102008052116 A1
- WO 2017085278 A1
- WO 2017194346 A1
- EP 3470457 A1